(19) Europäisches Patentamt
European Patent Office
Office européen des brevets

(11) **EP 4 668 345 A1**

(12) **EUROPEAN PATENT APPLICATION**
published in accordance with Art. 153(4) EPC

(43) Date of publication:
**24.12.2025 Bulletin 2025/52**

(21) Application number: **24863218.4**

(22) Date of filing: **05.09.2024**

(51) International Patent Classification (IPC):
*H01M 4/04* $^{(2006.01)}$     *G06Q 50/04* $^{(2012.01)}$
*G01B 7/004* $^{(2006.01)}$     *B65H 35/00* $^{(2006.01)}$
*G06K 19/06* $^{(2006.01)}$     *G06K 7/10* $^{(2006.01)}$

(52) Cooperative Patent Classification (CPC):
**B65H 35/00; G01B 7/004; G06K 7/10; G06K 19/06;
G06Q 50/04; H01M 4/04;** Y02E 60/10; Y02P 70/50

(86) International application number:
**PCT/KR2024/013404**

(87) International publication number:
**WO 2025/053639 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 KR 20230119548**

(71) Applicant: **LG Energy Solution, Ltd.
Seoul 07335 (KR)**

(72) Inventors:
• **HUH, Seung
Daejeon 34122 (KR)**
• **KIM, Min Su
Daejeon 34122 (KR)**
• **PARK, Jong Seok
Daejeon 34122 (KR)**
• **LEE, Jae Hwan
Daejeon 34122 (KR)**
• **KIM, Woo Jae
Daejeon 34122 (KR)**

(74) Representative: **BCKIP Part mbB
MK1
Landsbergerstraße 98, 3.Stock
80339 München (DE)**

(54) **SECONDARY BATTERY MANUFACTURING SYSTEM AND SECONDARY BATTERY MANUFACTURING METHOD**

(57) Example embodiments provide a secondary battery manufacturing system. The secondary battery manufacturing system includes a first electrode cutter configured to cut a first electrode sheet unwound from a first electrode roll to provide a plurality of first electrodes, a second electrode cutter configured to cut a second electrode sheet unwound from a second electrode roll to provide a plurality of second electrodes, a third electrode cutter configured to cut a third electrode sheet unwound from a third electrode roll to provide a plurality of third electrodes, an electrode identifier (ID) reader configured to sense an electrode ID of an electrode tab of each of the first, second or third electrodes selected from among the plurality of first electrodes, the plurality of second electrodes, and the plurality of third electrodes, and a controller configured to collect coordinate-related electrode ID data, based on a first input amount of the first electrode sheet, a second input amount of the second electrode sheet, a third input amount of the third electrode sheet, and an electrode ID sensing signal.

EP 4 668 345 A1

[FIG. 4]

**Description**

[Technical Field]

The present invention relates to a secondary battery manufacturing system and a secondary battery manufacturing method.

This application claims the benefit of priority based on Korean Patent Application No. 10-2023-0119548, filed on September 8, 2023, and the entire content of the Korean patent application is incorporated herein by reference.

[Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of battery cells. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

[Related Art Literature]

Korean Patent Application Publication No. 10-2022-0025288

[Disclosure]

[Technical Problem]

The present invention is directed to providing a secondary battery manufacturing system and method capable of retrieving history data of the manufacture of electrodes.

[Technical Solution]

Embodiments of the present invention provide a secondary battery manufacturing system. The secondary battery manufacturing system includes a first electrode cutter configured to cut a first electrode sheet unwound from a first electrode roll to provide a plurality of first electrodes, a second electrode cutter configured to cut a second electrode sheet unwound from a second electrode roll to provide a plurality of second electrodes, a third electrode cutter configured to cut a third electrode sheet unwound from a third electrode roll to provide a plurality of third electrodes, an electrode identifier (ID) reader configured to sense an electrode ID of an electrode tab of the first, second or third electrodes selected from among the plurality of first electrodes, the plurality of second electrodes, and the plurality of third electrodes, and a controller configured to collect coordinate-related electrode ID data, based on a first input amount of the first electrode sheet, a second input amount of the second electrode sheet, a third input amount of the third electrode sheet, and an electrode ID sensing signal.

The first electrodes and the third electrodes may have the same polarity, and the second electrodes may have a polarity different from the polarity of the first and third electrodes.

The electrode ID may be provided on each of the first electrodes and the third electrodes or provided only on the second electrodes.

The first input amount of the first electrode sheet may be determined based on a cut count of the first electrode cutter, the second input amount of the second electrode sheet may be determined based on a cut count of the second electrode cutter, and the third input amount of the third electrode sheet may be determined based on a cut count of the third electrode cutter.

The first input amount of the first electrode sheet may be calculated based on a pitch of the plurality of first electrodes and the cut count of the first electrode cutter, the second input amount of the second electrode sheet may be calculated based on a pitch of the plurality of second electrodes and the cut count of the second electrode cutter, and the third input amount of the third electrode sheet may be calculated based on a pitch of the plurality of third electrodes and the cut count of the third electrode cutter.

The secondary battery manufacturing system may further include a first rotary encoder configured to generate a first input amount signal indicating the first input amount of the first electrode sheet, a second rotary encoder configured to generate a second input amount signal indicating the second input amount of the second electrode sheet, and a third rotary encoder configured to generate a third input amount signal indicating the third input amount of the third electrode sheet.

The coordinate-related electrode ID data may include the electrode ID and a coordinate of at least one of the first to third electrodes matching the electrode ID.

The secondary battery manufacturing system may further include a server configured to store the coordinate-related electrode ID data.

The server may be configured to store a roll map of the first electrode roll for manufacture of the first electrode roll, a roll map of the second electrode roll for manufacture of the second electrode roll, and a roll map of the third electrode roll for manufacture of the third electrode roll.

The server may be configured to match the roll map of the first electrode roll, the roll map of the second electrode roll, and the roll map of the third electrode roll to the electrode ID.

An example embodiment provides a secondary battery manufacturing method. The secondary battery manufacturing method includes cutting a first electrode sheet, a second electrode sheet, and a third electrode sheet to form a plurality of first electrodes, a plurality of second electrodes, and a plurality of third electrodes, combining the plurality of first electrodes, the plurality of second electrodes, and the plurality of third electrodes, and collecting coordinate-related electrode ID data, in which a plurality of electrodes selected from among the plurality of first electrodes, the plurality of second electrodes, and the plurality of third electrodes includes an electrode tab with an electrode ID, and the coordinate-related electrode ID data includes the electrode ID and a coordinate of at least one of the first to third electrodes matching the electrode ID.

The coordinate-related electrode ID data may be collected based on a first input amount of the first electrode sheet, a second input amount of the second electrode sheet, a third input amount of the third electrode sheet, and an electrode ID sensing signal, and the electrode ID sensing signal may be generated based on sensing of the electrode ID.

The first input amount of the first electrode sheet may be determined based on a cut count of a first electrode cutter configured to cut the first electrode sheet, the second input amount of the second electrode sheet may be determined based on a cut count of a second electrode cutter configured to cut the second electrode sheet, and the third input amount of the third electrode sheet may be determined based on a cut count of a third electrode cutter to cut the third electrode sheet.

The first input amount of the first electrode sheet may be calculated based on a pitch of the plurality of first electrodes and the cut count of the first electrode cutter, the second input amount of the second electrode sheet may be calculated based on a pitch of the plurality of second electrodes and the cut count of the second electrode cutter, and the third input amount of the third electrode sheet may be calculated based on a pitch of the plurality of third electrodes and the cut count of the third electrode cutter.

The first input amount of the first electrode sheet may be determined by a first input amount signal generated by a first rotary encoder configured to sense an amount of rotation of a first electrode unwinder configured to unwind the first electrode sheet, the second input amount of the second electrode sheet may be determined by a second input amount signal generated by a second rotary encoder configured to sense an amount of rotation of a second electrode unwinder configured to unwind the second electrode sheet, and the third input amount of the third electrode sheet may be determined by a third input amount signal generated by a third rotary encoder configured to sense an amount of rotation of a third electrode unwinder configured to unwind the third electrode sheet.

An example embodiment provides an electrode assembly with electrodes that are manufactured by the secondary battery manufacturing system or the secondary battery manufacturing method and that include the coordinate-related electrode ID data.

Another aspect of the present invention provides a bi-cell.

The bi-cell includes a first electrode, a second electrode coupled to the first electrode with a separator interposed therebetween and having a polarity different from a polarity of the first electrode, and a third electrode coupled to the second electrode with a separator interposed therebetween and having a polarity that is different from the polarity of the second electrode and is the same as the polarity of the first electrode.

One of the first to third electrodes may include an electrode ID, and the electrode ID may match at least one of coordinates of the first to third electrodes.

The coordinates may indicate positions of the first to third electrodes during the coupling of the first to third electrodes with the separators interposed therebetween. The at least one coordinate matching the electrode ID may indicate a position of at least one electrode corresponding to the at least one coordinate among the first to third electrodes in a process when the electrode ID is sensed.

Another aspect of the present invention provides an electrode assembly.

The electrode assembly includes a second separator sheet extending in a spiral shape, and a plurality of bi-cells as described above and stacked vertically with the second separator sheet therebetween.

The plurality of bi-cells may be positioned between spiral arms of the second separator sheet to be sequentially covered with the second separator sheet extending in the spiral shape.

The plurality of bi-cells may include a A-type bi-cell in which one negative electrode is disposed between two positive electrodes, and a C-type bi-cell in which one positive electrode is disposed between two negative electrodes. In the electrode assembly, the A-type bi-cell and the C-type bi-cell may be alternately stacked with the second separator sheet interposed therebetween.

In an embodiment, an electrode ID of an electrode of an uppermost bi-cell of the electrode assembly may be allocated as a representative ID of the electrode assembly.

[Advantageous Effects]

According to example embodiments of the present invention, the traceability between a roll map produced in an electrode process and an intermediate product such as a bi-cell can be improved. Accordingly, the reliability of the manufacture of a secondary battery may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIG. 1 illustrates a secondary battery manufacturing system according to example embodiments.

FIG. 2 is a schematic view of a C-type bi-cell.

FIG. 3 is a schematic view of an A-type bi-cell.

FIG. 4 illustrates a secondary battery manufacturing system according to example embodiments.

FIG. 5 illustrates relative positions of elements of a first electrode sheet (ESN1).

FIG. 6 illustrates relative positions of elements of a second electrode sheet (ESP).

FIG. 7 illustrates relative positions of elements of a third electrode sheet (ESN2).

FIG. 8 illustrates a secondary battery manufacturing system according to example embodiments.

FIG. 9 illustrates relative positions of elements of a first electrode sheet (ESP1).

FIG. 10 illustrates relative positions of elements of a second electrode sheet (ESN).

FIG. 11 illustrates relative positions of elements of a third electrode sheet (ESP2).

FIG. 12 is a flowchart of a secondary battery manufacturing method according to example embodiments.

FIG. 13 illustrates an example of an electrode assembly including an electrode with a coordinate-related electrode identifier (ID).

FIG. 14 is a schematic view of a stacked structure of the electrode assembly of FIG. 13.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

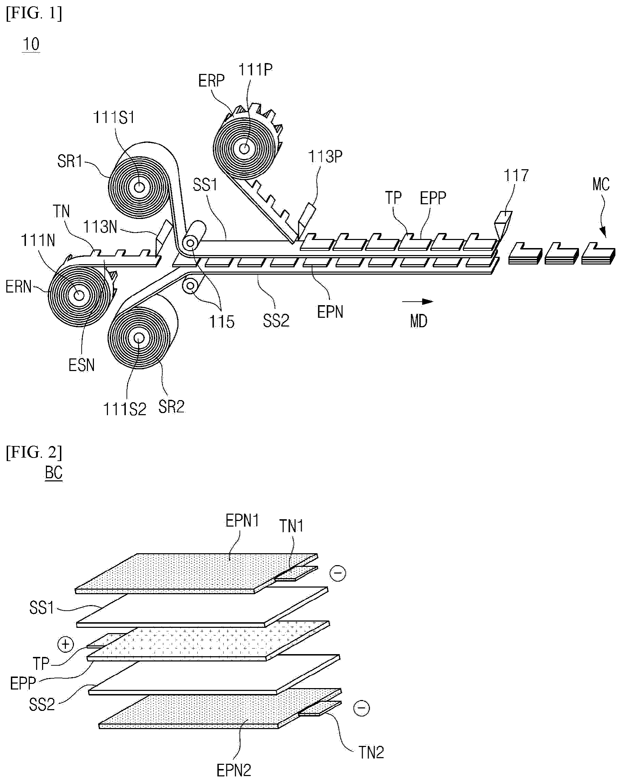

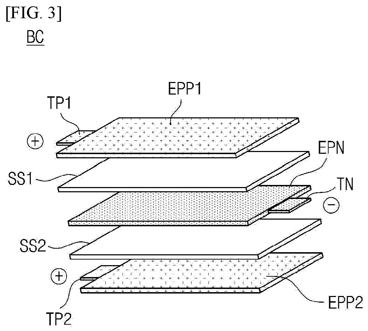

FIG. 1 illustrates a secondary battery manufacturing system according to example embodiments. FIG. 2 is a schematic view of a C-type bi-cell. FIG. 3 is a schematic view of a A-type bi-cell.

Referring to FIG. 1, a secondary battery manufacturing system 10 may include a positive electrode unwinder 111P, a negative electrode unwinder 111N, separator unwinders 111S1 and 111S2, electrode cutters 113P and 113N, guide rolls 115, and a separator cutter 117.

The secondary battery manufacturing system 10 may be configured to perform, for example, a lamination and stacking process or a lamination and folding process. As a result of the lamination process, mono-cells MCs or bi-cells BCs, which are unit cells, may be provided. Each of the mono-cells MC may include a positive electrode EPP, a negative electrode EPN, and separators. Each of the bi-cells BCs may include two negative electrodes EPN1 and EPN2, one positive electrode EPP, and separators (e.g., C-type bi-cells) as shown in FIG. 2 or include two positive electrodes EPP1 and EPP2, one negative electrode EPN, and separators (e.g., A-type bi-cells) as shown in FIG. 3.

In the stacking process, the mono-cells MC and additional half-cells may be stacked in a vertical direction to provide an electrode assembly.

In the folding process, the bi-cells BCs may be rolled up using the separators to provide an electrode assembly in the form of a folding cell FC.

FIG. 1 illustrates a secondary battery manufacturing system for performing the lamination process of manufacturing a mono-cell in which a negative electrode and a positive electrode are stacked together with a separator therebetween.

The unwinders 111P, 111N, 111S1, and 111S2 may be configured to put roll type materials into the secondary battery manufacturing system 10. More specifically, the unwinder 111P may be configured to unwind a positive electrode sheet ESP from a positive electrode roll ERP, the unwinder 111N may be configured to unwind a negative electrode sheet ESN from a negative electrode roll ERN, and the separator unwinders 111S1 and 111S2 may be configured to unwind separator sheets SS1 and SS2 from separator rolls SR1 and SR2.

The positive electrode roll ERP and the negative electrode roll ERN may be provided through a series of secondary battery manufacturing processes. For example, the positive electrode roll ERP and the negative electrode roll ERN may be provided by the coating process, the roll pressing process, a selective slitting process, and the notching process.

The coating process is a process of applying a coating material such as an electrode slurry to an electrode sheet. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet (ESN, ESP), which is coated with the electrode slurry, between pressing rolls facing each other. By using the pressing rolls, a surface of an electrode may be planarized and a bonding force between the active material and a current collector may be increased.

The coating process and the roll pressing process are performed on a wide electrode sheet to enhance the production (e.g., GWh) per line of secondary battery production equipment. Thereafter, in the slitting process, the wide electrode sheet may be cut according to the specifications of a battery cell. The slitting process may be omitted according to the specifications of the battery cell.

In the notching process, tabs may be formed on the electrode sheet, and a V-shaped groove may be formed to cut the electrode sheet as needed. In the notching process, positive electrode tabs TP and negative electrode tabs TN may be formed. In the notching process, an electrode identifier (ID) EID may be formed on the negative electrode tabs TN. The electrode ID EID may be formed by a method such as laser printing or ink printing. Accordingly, each of the negative electrode tabs TN may include the electrode ID EID. Unlike the negative electrode tabs TN, the positive electrode tabs TP may not include the electrode ID EID to prevent a defect.

However, the present invention is not limited thereto, and the electrode ID EID may include symbols indicating sequence numbers of the negative electrode tabs TN. The symbols of the electrode ID EID may include Arabic numerals but are not limited thereto. The symbols of the electrode ID EID may include arbitrary characters providing information about the sequence numbers of the negative electrode tabs TN.

The positive electrode cutter 113P may be configured to cut the positive electrode sheet ESP. A plurality of positive electrodes EPP may be provided by cutting the positive electrode sheet ESP. The negative electrode cutter 113N may be configured to cut the negative electrode sheet ESN. A plurality of negative electrodes EPN may be provided by cutting the negative electrode sheet ESN.

The guide rolls 115 may be configured to define a path of the separator sheets SS1 and SS2. The separator sheets SS1 and SS2 may be aligned side by side by the guide rolls 115. The positive electrodes EPP and the negative electrodes EPN may be on the separator sheets SS1 and SS2. For example, the negative electrodes EPN may be on the separator sheet SS2, and the positive electrodes EPP may be on the separator sheet SS1. The positive electrodes EPP and the negative electrodes EPN may be electrically and physically separated by the separator sheet SS1.

Although not shown in FIG. 1, additional guide rolls may be provided to define paths of the positive electrode sheet ESP and the negative electrode sheet ESN.

The separator cutter 117 may be configured to cut the separator sheets SS1 and SS2. Before the separator sheets SS1 and SS2 are cut by the separator cutter 117, a stacked structure of the separator sheets SS1 and SS2, the positive electrodes EPP, and the negative electrodes EPN may be pressed by a nip roll (not shown) or the like. By cutting the separator sheets SS1 and SS2, a mono-cell MC including the positive electrodes EPP, the negative electrodes EPN, and separators may be provided.

Although not shown in FIG. 1, a controller may be provided to control operations of the positive electrode cutter 113P, the negative electrode cutter 113N, and the like.

During the manufacture of the mono-cell MC, the electrode ID EID is provided to the negative electrode tabs TN of the negative electrode EPN, and should be related with coordinates (positions) of the positive and negative electrodes in the lamination process to ensure the traceability of the electrodes. The controller may collect coordinate-related electrode ID data.

It may be required to collect such electrode ID data not only for the manufacture of the mono-cell MC but also in a secondary battery manufacturing system for manufacturing a bi-cell BC.

To manufacture a bi-cell, a lamination process may be performed in a similar way to that shown in FIG. 1. For example, lamination of the C-type bi-cell of FIG. 2 may be performed by disposing a negative electrode roll on the positive electrode roll ERP of FIG. 1, and processing a negative electrode sheet, which is unwound from the negative electrode roll, in the same manner as a negative electrode sheet of the negative electrode roll ERN below the positive electrode roll ERP. Lamination of the A-type bi-cell of FIG. 3 may be performed by disposing a positive electrode roll below the negative electrode roll ERN of FIG. 1, and processing a positive electrode sheet, which is unwound from the positive electrode roll, in the same manner as a positive electrode sheet of the positive electrode roll ERP on the negative electrode roll ERN.

[Embodiments of the Present Invention]

(First Embodiment)

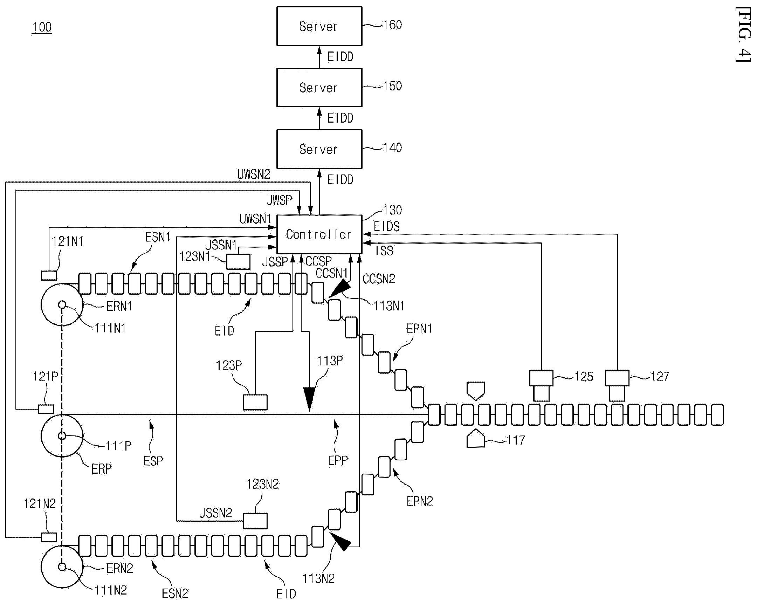

FIG. 4 illustrates a secondary battery manufacturing system for manufacturing a C-type bi-cell according to exemplary embodiments.

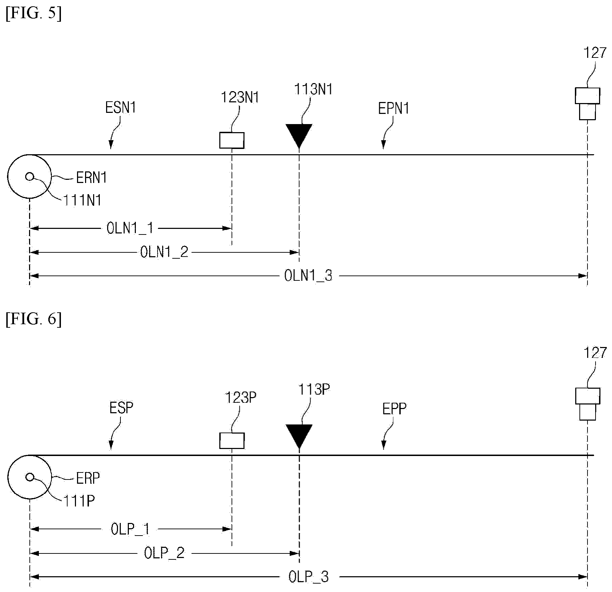

FIG. 5 illustrates relative positions of elements of a first electrode sheet ESN1.

FIG. 6 illustrates relative positions of elements of a second electrode sheet ESP.

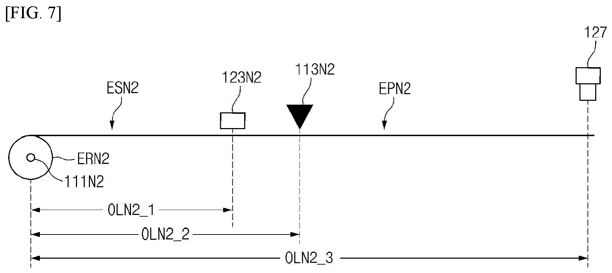

FIG. 7 illustrates relative positions of elements of a third electrode sheet ESN2.

Referring to FIG. 4, a secondary battery manufacturing system 100 may include a first negative electrode unwinder 111N1, a positive electrode unwinder 111P, a second negative electrode unwinder 111N2, electrode cutters 113N1, 113P and 113N2, a separator cutter 117, rotary encoders 121N1, 121P and 121N2, joint sensors 123N1, 123P and 123N2, an electrode ID reader 127, a controller 130, and servers 140, 150, and 160.

In the system of FIG. 4, guide rolls may also be provided to guide a separator sheet or electrode sheets to perform lamination. For simplicity of illustration, the guide rolls are not shown in FIG. 4. In addition, separator rolls and separator unwinders are not shown.

The present embodiment provides a manufacturing system for lamination of a C-type bi-cell in which one positive electrode is disposed between two negative electrodes with the same polarity. In the drawings, a first negative electrode roll ERN1, a positive electrode roll ERP, and a second negative electrode roll ERN2 are sequentially illustrated in a downward direction. The first negative electrode roll ERN1, the positive electrode roll ERP, and the second negative electrode roll ERN2 may be referred to as a first electrode roll, a second electrode roll, and a third electrode roll, respectively. A first negative electrode sheet ESN1, a positive electrode sheet ESP, and a second negative electrode sheet ESN2 may be referred to as a first electrode sheet, a second electrode sheet, and a third electrode sheet, respectively. A first negative electrode EPN1, a positive electrode EPP, and a second negative electrode EPN2 may be referred to as a first electrode, a second electrode, and a third electrode, respectively.

However, as in other embodiments described below, the polarities of the first to third electrodes may be different from those in the present embodiment.

The unwinders 111N1, 111P, and 111N2 may be configured to put roll-type materials into the secondary battery manufacturing system 100. More specifically, the unwinder 111N1 may be configured to unwind the first negative electrode sheet ESN1 from the first negative electrode roll ERN1, the unwinder 111P may be configured to unwind the positive electrode sheet ESP from the positive electrode roll ERP, and the unwinder 111N2 may be configured to unwind the second negative electrode sheet ESN2 from the second negative electrode roll ERN2. Although not shown, the separator unwinders 111S1 and 111S2 and the separator rolls SR1 and SR2 of FIG. 1 may be provided, and the unwinders 111S1 and 111S2 may be configured to unwind separator sheets SS1 and SS2 from separator rolls.

As described above, the first negative electrode roll ERN1, the positive electrode roll ERP, and the second negative electrode roll ERN2 may be provided through a series of a secondary battery manufacturing processes. For example, the first negative electrode roll ERN1, the positive electrode roll ERP, and the second negative electrode roll ERN2 may be provided by the coating process, the roll pressing process, the selective slitting process, and the notching process.

In the notching process, first negative electrode tabs TN1, positive electrode tabs TP, and second negative electrode tabs TN2 may be formed. In the notching process, an electrode ID EID may be formed on the first negative electrode tabs TN1 and the second negative electrode tabs TN2. The electrode ID EID may be formed by a method such as laser printing or ink printing. Accordingly, each of the negative electrode tabs TN1 and TN2 may include an electrode ID EID. Unlike the negative electrode tabs TN1 and TN2, the positive electrode tabs TP may not include the electrode ID EID to prevent a defect.

The electrode ID EID may include symbols representing sequence numbers of the electrode tabs TN1 and TN2. The symbols of the electrode ID EID may include Arabic numerals but are not limited thereto. The symbols of the electrode ID EID may include arbitrary characters providing information about the sequence numbers of the negative electrode tabs TN1 and TN2.

The first negative electrode cutter 113N1 may be configured to cut the first negative electrode sheet ESN1. A plurality of first negative electrodes EPN1 may be provided by cutting the first negative electrode sheet ESN1. A positive electrode cutter 113P may be configured to cut the positive electrode sheet ESP. A plurality of positive electrodes EPP may be provided by cutting the positive electrode sheet ESP. The second negative electrode cutter 113N2 may be configured to cut the second negative electrode sheet ESN2. A plurality of second negative electrodes EPN2 may be provided by cutting the second negative electrode sheet ESN2.

The controller 130 may control operations of the first negative electrode cutter 113N1, the positive electrode cutter 113P, and the second negative electrode cutter 113N2 as described below and thus may be configured to count a cut of the first negative electrode sheet ESN1 by the first negative electrode cutter 113N1, a cut of the positive electrode sheet ESP by the positive electrode cutter 113P, and a cut of the second negative electrode sheet ESN2 by the second negative electrode cutter 113N2. For example, the controller 130 may be configured to receive a first cut count signal CCSN1 from the first negative electrode cutter 113N1, receive a second cut count signal CCSP from the positive electrode cutter 113P, and receive a third cut count signal CCSN2 from the second negative electrode cutter 113N2.

The cut first negative electrodes EPN1 and positive electrodes EPP may be electrically and physically separated from each other by, for example, the separator sheet SS1. The cut positive electrodes EPP and second negative electrodes EPN2 may be electrically and physically separated from each other by, for example, the separator sheet SS2.

The separator cutter 117 may be configured to cut the separator sheets SS1 and SS2. Before the separator sheets SS1 and SS2 are cut by the separator cutter 117, the stacked structure of the separator sheets SS1 and SS2, the positive electrodes EPP, and the second negative electrodes EPN2 may be pressed by a nip roll (not shown) or the like. The C-type bi-cell BC of FIG. 2 including the first negative electrodes EPN1, the positive electrodes EPP, the second negative electrodes EPN2, and the separators SS1 and SS2 may be provided by cutting the separator sheets SS1 and SS2.

The first negative electrode rotary encoder 121N1 may be configured to sense an amount of rotation of the unwinder 111N1. The first negative electrode rotary encoder 121N1 may be configured to sense an amount of the first negative electrode sheet ESN1 unwound from the first negative electrode roll ERN1 by the unwinder 111N1. Accordingly, the first negative electrode rotary encoder 121N1 may be configured to generate a first input amount signal UWSN1 indicating a length of the first negative electrode sheet ESN1 unwound by the unwinder 111N1 (i.e., an input amount of the first negative electrode sheet ESN1). The first negative electrode rotary encoder 121N may be configured to transmit the first input amount signal UWSN1 to the controller 130.

The rotary encoder 121P may be configured to sense an amount of rotation of the unwinder 111P. The rotary encoder 121P may be configured to sense an amount of the positive electrode sheet ESP unwound from the positive electrode roll ERP by the unwinder 111P. Accordingly, the rotary encoder 121P may be configured to generate a second input amount signal UWSP indicating a length of the positive electrode sheet ESP unwound by the unwinder 111P (i.e., an input amount of the positive electrode sheet ESP). The rotary encoder 121P may be configured to transmit the second input amount signal UWSP to the controller 130.

The second negative electrode rotary encoder 121N2 may be configured to sense an amount of rotation of the unwinder 111N2. The second negative electrode rotary encoder 121N2 may be configured to sense an amount of the second negative electrode sheet ESN2 unwound from the second negative electrode roll ERN2 by the unwinder 111N2. Accordingly, the second negative electrode rotary encoder 121N2 may be configured to generate a third input amount signal UWSN2 indicating a length of the second negative electrode sheet ESN2 unwound by the unwinder 111N2 (i.e., an input amount of the second negative electrode sheet ESN2). The second negative electrode rotary encoder 121N2 may be configured to transmit the third input amount signal UWSN2 to the controller 130.

The first negative electrode joint sensor 123N1 may be configured to sense a joint of the first negative electrode sheet ESN1. Here, the first negative electrode sheet ESN1 may include a joint when the first negative electrode roll ERN1 is replaced with another (i.e., when a subsequent first negative electrode roll ERN1 is loaded on the unwinder 111N1), when an electrode is broken in a current process (i.e., during processing of the first negative electrode sheet ESN1 by the secondary battery manufacturing system 100), or when the electrode was broken in a previous process (i.e., during processing of the first negative electrode roll ERN1 before being loaded on the unwinder 111N1).

The first negative electrode joint sensor 123N1 may be, for example, a color sensor but is not limited thereto. The first negative joint sensor 123N1 may be configured to generate a first joint sensing signal JSSN1. The first joint sensing signal JSSN1 may be transmitted to the controller 130.

The positive electrode joint sensor 123P may be configured to sense a joint of the positive electrode sheet ESP. Here, the positive electrode sheet ESP may include a joint when the positive electrode roll ERP is replaced with another (i.e., when a subsequent positive electrode roll ERP is loaded on the unwinder 111P), when an electrode is broken in a current process (i.e., during processing of the positive electrode sheet ESP by the secondary battery manufacturing system 100), or when the electrode was broken in a previous process (i.e., during processing of the positive electrode roll ERP before being loaded on the unwinder 111P).

The positive electrode joint sensor 123P may be, for example, a color sensor but is not limited thereto. The positive electrode joint sensor 123P may be configured to generate a second joint sensing signal JSSP. The second joint sensing signal JSSP may be transmitted to the controller 130.

The second negative electrode joint sensor 123N2 may be configured to sense a joint of the second negative electrode sheet ESN2. Here, the second negative electrode sheet ESN2 may include a joint when the second negative electrode roll ERN2 is replaced with another (i.e., when a subsequent second negative electrode roll ERN2 is loaded on the unwinder 111N2), when an electrode is broken in a current process (i.e., during processing of the second negative electrode sheet ESN2 by the secondary battery manufacturing system 100), or when the electrode was broken in a previous process (i.e., during processing of the second negative electrode roll ERN2 before being loaded on the unwinder 111N2).

The second negative electrode joint sensor 123N2 may be, for example, a color sensor but is not limited thereto. The second joint sensor 123N2 may be configured to generate a third joint sensing signal JSSN2. The third joint sensing signal JSSN2 may be transmitted to the controller 130.

The electrode gap sensor 125 may be configured to sense gaps between the first negative electrodes EPN1, the positive electrodes EPP, and the second negative electrodes EPN2. For example, the electrode gap sensor 125 may be configured to sense gaps between the first negative electrodes EPN1. As another example, the electrode gap sensor 125 may be configured to sense gaps between the positive electrodes EPP. As another example, the electrode gap sensor 125 may be configured to sense gaps between the second negative electrodes EPN2. As another example, the electrode gap sensor 125 may be configured to sense gaps between the first negative electrodes EPN1, gaps between the positive electrodes EPP, and gaps between the second negative electrodes EPN2.

The electrode gap sensor 125 may be configured to generate a gap sensing signal ISS. The electrode gap sensor 125 may be configured to transmit the gap sensing signal ISS to the controller 130.

The electrode ID reader 127 may be configured to sense an electrode ID EID. The electrode ID reader 127 may be configured to read a sequence number indicated by the electrode ID EID. The electrode ID reader 127 may be, for example, a bar code reader (BCR) but is not limited thereto. The electrode ID reader 127 may be an optical character reader (OCR). The electrode ID reader 127 may be configured to generate an electrode ID sensing signal EIDS based on the sensing of the electrode ID EID. The electrode ID reader 127 may be configured to transmit the electrode ID sensing signal EIDS to the controller 130.

The controller 130 may be configured to control components of the secondary battery manufacturing system 100, e.g., the unwinders 111N1, 111P, 111N2, 111S1, and 111S2, the first negative electrode cutter 113N1, the positive electrode cutter 113P, the second negative electrode cutter 113N2, and the separator cutter 117.

The controller 130 may be in operative communication with the rotary encoders 121N1, 121P, and 121N2, the joint sensors 123N1, 123P, and 123N2, the electrode gap sensor 125, and the electrode ID reader 127 through a wired or wireless data network. The data network may be unidirectional or bidirectional. The data network may be implemented by a physical channel, WiFi, public networks and/or specialized networks using Bluetooth or other frequency bands. The rotary encoders 121N1, 121P, and 121N2, the joint sensors 123N1, 123P, and 123N2, the electrode gap sensor 125, and the electrode ID reader 127 may be configured to collect data from equipment, a workpiece, an intermediate product, and a product in the secondary battery manufacturing system 100 or to generate a signal for collecting data therefrom.

As a non-limiting example, the controller 130 may be a programmable logic controller (PLC). A PLC is a special type of microprocessor-based controller that stores instructions using a programmable memory and implements functions such as logic, sequencing, timing, counting and arithmetic operations to control machines and processes. It is easy to operate and program the PLC.

The controller 130 may include a power supply, a CPU, an input interface, an output interface, a communication interface, and memory devices. For an operation of the controller 130, power may be supplied to other elements of the controller 130, such as the CPU, the input interface, the output interface, the communication interface, and the memory devices. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The communication interface may be configured to transmit and receive data between the controller 130 and the server 140.

However, embodiments are not limited thereto, and the controller 130 may include one of a simple controller, a complex processor such as a microprocessor, a CPU or a GPU, a processor configured by software, dedicated hardware, and firmware. The controller 130 may be implemented, for example, by a general-purpose computer or application-specific hardware such as a digital signal processor (DSP), a field-programmable gate array (FPGA) or an application-specific integrated circuit (ASIC).

Cutting may be performed by the first negative electrode cutter 113N1, the positive electrode cutter 113P, and the second negative electrode cutter 113N2, based on a pitch that is a predetermined repetition unit. The pitch may be a minimum unit length by which the same shape or structure is repeated, similar to a machine-direction length between positive electrode tabs TP of neighboring positive electrodes EPP. Because the positive electrode sheet ESP is cut to substantially the same target length, an input amount of the positive electrode sheet ESP may be proportional to a cut count of the positive electrode cutter 113P (e.g., the second cut count signal CCSP). Similarly, because the first and second negative electrode sheets ESN1 and ESN2 are cut to substantially the same target length, input amounts of the first and second negative electrode sheets ESN1 and ESN2 may be proportional to a cut count of the first negative electrode cutter 113N1 (e.g., the first cut count signal CCSN1). An input amount of the second negative electrode sheet ESN2 may be proportional to a cut count of the second negative electrode cutter 113N2 (e.g., the third cut count signal CCSN2).

More specifically, the input amount of the first negative electrode sheet ESN1 may be the sum of a product of a cut count Cutcount_N1 and a pitch Pitch_N1 and an offset length OLN1_2 as shown in Equation 1 below. Here, the offset length OLN1_2 may be a length of the first negative electrode sheet ESN1 between the unwinder 111N1 and the first negative electrode cutter 113N1.

[Equation 1]
$$\text{Input amount\_N1}=OLN1\_2+(Pitch\_N1)\times(Cutcount\_N1)$$

The input amount of the positive electrode sheet ESP may be the sum of a product of a cut count Cutcount_P and a pitch Pitch_P and an offset length OLP_2 as shown in Equation 2 below. Here, the offset length OLP_2 may be a length of the positive electrode sheet ESP between the unwinder 111P and the positive electrode cutter 113P.

[Equation 2]
$$\text{Input amount\_P}=OLP\_2+(Pitch\_P)\times(Cutcount\_P)$$

Similarly, the input amount of the second negative electrode sheet ESN2 may be the sum of a product of a cut count Cutcount_N2 and a pitch Pitch_N2 and an offset length OLN2_2 as expressed in Equation 3 below. Here, the offset length OLN2_2 may be a length of the second negative electrode sheet ESN2 between the unwinder 111N2 and the second negative electrode cutter 113N2.

[Equation 3]

$$\text{Input amount\_N2} = \text{OLN2\_2} + (\text{Pitch\_N2}) \times (\text{Cutcount\_N2})$$

In another example, the input amount of the first negative electrode sheet ESN1 may be determined from the first input amount signal UWSN1 of the rotary encoder 121N1, the input amount of the positive electrode sheet ESP may be determined from the second input amount signal UWSP of the rotary encoder 121P, and the input amount of the second negative electrode sheet ESN2 may be determined from the third input amount signal UWSN2 of the rotary encoder 121N2.

The input amount of the first negative electrode sheet ESN1 may indicate a relative position of a part of the first negative electrode sheet ESN1, which is unwound by the unwinder 111N1, on the first negative electrode sheet ESN1. The controller 130 may be configured to determine a coordinate of an event occurring on the first negative electrode sheet ESN1, based on the input amount of the first negative electrode sheet ESN1 and the offset lengths OLN1_1, OLN1_2, and OLN1_3.

For example, a coordinate of a part of the first negative electrode sheet ESN1 sensed by the first negative electrode joint sensor 123N1 (i.e., a coordinate on the first negative electrode sheet ESN1 derived from the first joint sensing signal JSSN1) may be determined by performing an operation (e.g., addition or subtraction) on the input amount of the first negative electrode sheet ESN1 and the offset length OLN1_1. The offset length OLN1_1 may be a length of the first negative electrode sheet ESN1 between the unwinder 111N1 and the part of the first negative electrode sheet ESN1 sensed by the first negative electrode joint sensor 123N1.

For example, a coordinate of a part of the first negative electrode sheet ESN1 cut by the first negative electrode cutter 113N1 may be determined by performing an operation (e.g., addition or subtraction) on the input amount of the first negative electrode sheet ESN1 and the offset length OLN1_2. The offset length OLN1_2 may be a length of the first negative electrode sheet ESN1 between the unwinder 111N1 and the part of the first negative electrode sheet ESN1 cut by the first negative electrode cutter 113N1.

For example, a coordinate (e.g., a conversion coordinate or an equivalent coordinate) of the first negative electrode EPN1 sensed by the electrode ID reader 127 may be determined by performing an operation (e.g., addition or subtraction) on the input amount of the first negative electrode sheet ESN1 and the offset length OLN_3. The offset length OLN1_3 may be a length (e.g., a conversion length or equivalent length) of the first negative electrode sheet ESN1 between the unwinder 111N1 and the first negative electrode EPN1 sensed by the electrode ID reader 127.

In this case, there are first negative electrodes EPN1 between the first negative electrode cutter 113N1 and the electrode ID reader 127 rather than the first negative electrode sheet ESN1. Therefore, the offset length OLN1_3 may not be a length of an actual negative electrode sheet ESN1 but may be an equivalent length calculated based on a cut count of the first negative electrode cutter 113N1 or determined from the first input amount signal UWSN1.

The input amount of the positive electrode sheet ESP may indicate a relative position of a part of the positive electrode sheet ESP, which is unwound by the unwinder 111P, on the positive electrode sheet ESP. The controller 130 may be configured to determine a coordinate of an event occurring on the positive electrode sheet ESP based on the input amount of the positive electrode sheet ESP and the offset lengths OLP_1, OLP_2, and OLP_3.

For example, a coordinate of a part of the positive electrode sheet ESP sensed by the joint sensor 123P (i.e., a coordinate on the positive electrode sheet ESP derived from the second joint sensing signal JSSP) may be determined by performing an operation (e.g., addition or subtraction) on the input amount of the positive electrode sheet ESP and the offset length OLP_1. The offset length OLP_1 may be a length of the positive electrode sheet ESP between the unwinder 111P and the part of the positive electrode sheet ESP sensed by the joint sensor 123P.

For example, a coordinate of a part of the positive electrode sheet ESP cut by the positive electrode cutter 113P may be determined by performing an operation (e.g., addition or subtraction) on the input amount of the positive electrode sheet ESP and the offset length OLP_2. The offset length OLP_2 may be a length of the positive electrode sheet ESP between the unwinder 111P and the part of the positive electrode sheet ESP cut by the positive electrode cutter 113P.

For example, a coordinate (e.g., a conversion coordinate or an equivalent coordinate) of the positive electrode EPP coupled to the first negative electrode EPN1 sensed by the electrode ID reader 127 may be determined by performing an operation (e.g., addition or subtraction) on the input amount of the positive electrode sheet ESP and the offset length OLP_3. The offset length OLP_3 may be a length (e.g., a conversion length or equivalent length) of the positive electrode sheet ESP between the unwinder 111P and the positive electrode EPP coupled to the first negative electrode EPN1 sensed by the electrode ID reader 127.

In this case, there are positive electrodes EPP between the positive electrode cutter 113P and the electrode ID reader 127 rather than the positive electrode sheet ESP. Therefore, the offset length OLP_3 may not be a length of an actual positive electrode sheet ESP but may be an equivalent length calculated based on a cut count of the positive electrode cutter 113P or determined from the second input amount signal UWSP.

The input amount of the second negative electrode sheet ESN2 may indicate a relative position of a part of the second negative electrode sheet ESN2, which is unwound by the unwinder 111N2, on the second negative electrode sheet ESN1.

The controller 130 may be configured to determine a coordinate of an event occurring on the second negative electrode sheet ESN2, based on the input amount of the second negative electrode sheet ESN2 and the offset lengths OLN2_1, OLN2_2, and OLN2_3.

For example, a coordinate of a part of the second negative electrode sheet ESN2 sensed by the second negative electrode joint sensor 123N2 (i.e., a coordinate on the second negative electrode sheet ESN2 derived from the third joint sensing signal JSSN2) may be determined by performing an operation (e.g., addition or subtraction) on the input amount of the second negative electrode sheet ESN2 and the offset length OLN2_1. The offset length OLN2_1 may be a length of the second negative electrode sheet ESN2 between the unwinder 111N2 and the part of the second negative electrode sheet ESN2 sensed by the second negative electrode joint sensor 123N2.

For example, a coordinate of a part of the second negative electrode sheet ESN2 cut by the second negative electrode cutter 113N2 may be determined by performing an operation (e.g., addition or subtraction) on the input amount of the second negative electrode sheet ESN2 and the offset length OLN2_2. The offset length OLN2_2 may be a length of the second negative electrode sheet ESN2 between the unwinder 111N2 and the part of the second negative electrode sheet ESN2 cut by the second negative electrode cutter 113N2.

For example, a coordinate (e.g., a conversion coordinate or equivalent coordinate) of the second negative electrode EPN2 corresponding to a lower part of the positive electrode EPP coupled to the first negative electrode EPN1 sensed by the electrode ID reader 127, i.e., the second negative electrode EPN2 coupled to the positive electrode EPP, may be determined by performing an operation (e.g., addition or subtraction) on the input amount of the second negative electrode sheet ESN2 and the offset length OLN2_3. The offset length OLN2_3 may be a length (e.g., a conversion length or equivalent length) of the second negative electrode sheet ESN2 between the unwinder 111N2 and the second negative electrode EPN2 sensed by the electrode ID reader 127.

In this case, there are second negative electrodes EPN2 between the second negative electrode cutter 113N2 and the electrode ID reader 127 rather than the second negative electrode sheet ESN2. Therefore, the offset length OLN2_3 may not be a length of an actual negative electrode sheet ESN2 but may be an equivalent length calculated based on a cut count of the second negative electrode cutter 113N2 or determined from the third input amount signal UWSN2.

Coordinates on the negative electrode sheets ESN1 and ESN2 may match parts of the negative electrode sheets ESN1 and ESN2. That is, arbitrary points on the negative electrode sheets ESN1 and ESN2 may have coordinates. The coordinates may be one-dimensional (1D) quantities in a machine direction MD (or a longitudinal direction) of a sheet material SM but are not limited thereto. The coordinates may be two-dimensional (2D) quantities in the machine direction MD and a transverse direction TD (or a width direction) of the negative electrode sheets ESN1 and ESN2.

Coordinates on the positive electrode sheet ESP may match parts of the positive electrode sheet ESP. That is, arbitrary points on the positive electrode sheet ESP may have coordinates. The coordinates may be 1D quantities in the machine direction MD (or the longitudinal direction) of the sheet material SM but are not limited thereto. The coordinates may be 2D quantities in the machine direction MD and a transverse direction TD (or a width direction) of the positive electrode sheet ESP.

The second negative electrode tab TN2 of the second negative electrode EPN2 may also include an electrode ID. However, when the electrode ID reader 127 is installed on the first negative electrode EPN1, the electrode ID reader 127 may identify only the electrode ID of the first negative electrode EPN1. That is, the electrode ID reader 127 is not capable of identifying the electrode ID of the second negative electrode EPN2 disposed at the bottom. Therefore, in the present embodiment, the coordinates of the positive electrode EPP coupled to the first negative electrode EPN1 and the second negative electrode EPN2 are matched to the electrode ID of the first negative electrode EPN1 sensed by the electrode ID reader 127.

When the electrode ID reader 127 is below the second negative electrode EPN2, the electrode ID of the second negative electrode EPN2 may be identified. In this case, the coordinates of the positive electrode EPP coupled to the second negative electrode EPN2 and the first negative electrode EPN1 may be matched to the electrode ID of the second negative electrode EPN2 sensed by the electrode ID reader.

Meanwhile, when the electrode ID reader 127 is installed above the first negative electrode EPN1 and below the second negative electrode EPN2, the electrode IDs may be obtained from the first negative electrode EPN1 and the second negative electrode EPN2. In this case, the coordinate of the positive electrode EPP may be matched to the obtained electrode IDs. However, a manufactured bi-cell BC can be identified only by one representative ID. That is, a plurality of IDs are not required to identify the bi-cell BC and) identification and perform data management. In addition, manufacturing costs increase when a plurality of electrode ID readers 127 are installed. Accordingly, in the present embodiment, an electrode ID of one electrode (an electrode with an electrode ID identifiable at a specific location by an electrode ID reader, i.e., a first negative electrode in the present embodiment) selected from among three types of electrodes (first to third electrodes) is sensed, and coordinates of the remaining electrodes are matched to the sensed electrode ID. In addition, a coordinate of the electrode (the first negative electrode) from which the electrode ID is obtained may be matched to the electrode ID.

The controller 130 may be configured to collect coordinate-related electrode ID data EIDD, based on an electrode ID sensing signal EIDS sensed in the first negative electrode EPN1, a first input amount of the first negative electrode sheet ESN1, a second input amount of the positive electrode sheet ESP, and a third input amount of the second negative electrode sheet ESN2.

As described above, the first input amount of the first negative electrode sheet ESN1 may be calculated based on a cut count of the first negative electrode cutter 113N1 or be determined by the first input amount signal UWSN1.

As described above, the second input amount of the positive electrode sheet ESP may be calculated based on a cut count of the positive electrode cutter 113P or be determined by the second input amount signal UWSP.

As described above, the third input amount of the second negative electrode sheet ESN2 may be calculated based on a cut count of the second negative electrode cutter 113N2 or be determined by the third input amount signal UWSN2.

According to example embodiments, the controller 130 may be configured to determine a coordinate of the first negative electrode EPN1 sensed by the electrode ID reader 127 by performing an operation on an input amount of the first negative electrode sheet ESN1 and the offset length OLN1_3. The controller 130 may be configured to match the coordinate of the first negative electrode EPN1 sensed by the electrode ID reader 127 to the electrode ID sensing signal EIDS.

According to example embodiments, the controller 130 may be configured to determine a coordinate of the positive electrode EPP coupled to the first negative electrode EPN1 sensed by the electrode ID reader 127 by performing an operation on an input amount of the positive electrode sheet ESP and the offset length OLP_3. The controller 130 may be configured to match the coordinate of the positive electrode EPP coupled to the first negative electrode EPN1 sensed by the electrode ID reader 127 to the electrode ID sensing EIDS.

According to example embodiments, the controller 130 may be configured to determine a coordinate of the second negative electrode EPP corresponding to the coordinate of the positive electrode EPP coupled to the first negative electrode EPN1 sensed by the electrode ID reader 127 by performing an operation on an input amount of the second negative electrode sheet ESN and the offset length OLN2_3. The controller 130 may be configured to match the coordinates of the second negative electrode EPN2 to the electrode ID sensing signal EIDS.

Here, the coordinate of the first negative electrode EPN1 may be a start or end coordinate of the first negative electrode EPN1 or the coordinate of the first negative electrode tab TN1. The coordinate of the first negative electrode EPN1 may include at least two among the start and end coordinates of the first negative electrode EPN1 and the coordinate of the first negative electrode tab TN1.

The coordinate of the positive electrode EPP may be a start or end coordinate of the positive electrode EPP or a coordinate of a part of the positive electrode EPP overlapping the first negative electrode tab TN1. Alternatively, the coordinate of the positive electrode EPP may include at least two among the start and end coordinates of the positive electrode EPP and the coordinate of the part of the positive electrode EPP overlapping the first negative electrode tab TN1.

The coordinate of the second negative electrode EPN2 may be a start or end coordinate of the second negative electrode EPN2 or the coordinate of the second negative electrode tab TN2. The coordinate of the second negative electrode EPN2 may include at least two among the start and end coordinates of the second negative electrode EPN2 and the coordinate of the second negative electrode tab TN2. Alternatively, the coordinate of the second negative electrode EPN2 may be a coordinate of a part of the second negative electrode EPN2 overlapping the first negative electrode tab TN1 and the positive electrode EPP.

For matching the coordinate of the first negative electrode sheet ESN1, the coordinate of the positive electrode sheet ESP, and the coordinate of the second negative electrode sheet ESN2 to the electrode ID EID, a lot number of the first negative electrode roll ERN1 from which the first negative electrode sheet ESN1 is unwound, a lot number of the positive electrode roll ERP from which the positive electrode sheet ESP is unwound, and a lot number of the second negative electrode roll ERN2 from which the second negative electrode sheet ESN2 is unwound should be determined. The first joint sensing signal JSSN1, the second joint sensing signal JSSP, and the third joint sensing signal JSSN2 may be used to identify lots. According to example embodiments, the controller 130 may update the lot numbers of the first negative electrode roll ERN1, the positive electrode roll ERP, and the second negative electrode roll ERN2, based on the first joint sensing signal JSSN1, the second joint sensing signal JSSP, and the third joint sensing signal JSSN2. Accordingly, the coordinates of the first negative electrode sheet ESN1, the positive electrode sheet ESP and the second negative electrode sheet ESN2 may be reset based on the first joint sensing signal JSSN1, the second joint sensing signal JSSP, and the third joint sensing signal JSSN2.

The offset length OLN1_1, the offset length OLP_1, and the offset length OLN2_1 may be used to update the lot numbers and reset the coordinates of the first negative electrode sheet ESN1, the positive electrode sheet ESP and the second negative electrode sheet ESN2. Here, the offset length OLN1_1 may be a length of the first negative electrode sheet ESN1 between the unwinder 111N1 and the first negative electrode joint sensor 123N1. Here, the offset length OLP_1 may be a length of the positive electrode sheet ESP between the unwinder 111P and the positive electrode joint sensor 123P. Here, the offset length OLN2_1 may be a length of the second negative electrode sheet ESN2 between the unwinder 111N2 and the second negative electrode joint sensor 123N2.

More specifically, when a new positive electrode roll ERP is loaded on the unwinder 111P, the new positive electrode roll ERP should be connected to a remaining positive electrode sheet ESP of a previous lot using joints to continue the roll-to-roll process. For example, it may be determined that a part of a positive electrode sheet ESP following a joint of a positive electrode sheet ESP sensed first after loading a positive electrode roll ERP of a new lot on the unwinder 111P has been unwound from the newly loaded positive electrode roll ERP. Accordingly, when the second joint sensing signal JSSP is generated after the loading of the new positive electrode roll ERP, the controller 130 may be configured to match the electrode ID EID to a coordinate of a positive electrode sheet ESP of a subsequent lot. An electrode ID EID of each of first negative electrodes EPN1 coupled to positive electrodes EPP may belong to another lot, based on the loading of the positive electrode roll ERP and the sensing of a joint.

Similarly, when a new negative electrode roll ERN1 or ERN2 is loaded on the unwinder 111N1 or 111N2, the new negative electrode roll ERN1 or ERN2 should be connected to a remaining negative electrode sheet ESN1 or ESN2 of a previous lot using a joint for the continuation of the roll-to-roll process . For example, it may be determined that a part of a negative electrode sheet ESN1 or ESN2 following a joint of a negative electrode sheet ESN1 or ESN2 sensed first after loading a negative electrode roll ERN1 or ERN2 of a new lot on the unwinder 111N1 or 111 N2 has been unwound from the newly loaded negative electrode roll ERN1 or ERN2. Accordingly, when the joint sensing signal JSSN1 or JSSN2 is generated after loading the new negative electrode roll ERN1 or ERN2, the controller 130 may be configured to match the electrode EID to a coordinates of a negative electrode sheet ESN1 or ESN2 of a subsequent lot. An electrode ID EID of each of negative electrodes EPN1 or EPN2 may belong to another lot, based on the loading of the negative electrode roll ERN1 or ERN2 and the sensing of a joint.

The coordinate-related electrode ID data EIDD may include the electrode ID EID of the first negative electrode EPN1, and at least one among the coordinate of the first negative electrode EPN1, the coordinate of the positive electrode EPP, and the coordinate of the second negative electrode EPN2 that match the electrode ID EID of the first negative electrode EPN1.

The server 140 may be configured to relay communication between the controller 130 and the server 150. The server 140 may be a communication server. A language and protocol of the server 150 may be different from a language and protocol of the controller 130. For example, the language of the server 150 may be SQL, and the language of the controller 130 may be a ladder diagram. In addition, the server 140 may be configured to convert data, e.g., the coordinate-related electrode ID data EIDD, collected by the controller 130 into the language of the server 150 and record the converted data in a database of the server 150.

The server 150 may be configured to store the coordinate-related electrode ID data EIDD. The server 150 may be configured to process the coordinate-related electrode ID data EIDD. The server 150 may be configured to transmit the coordinate-related electrode ID data EIDD to the server 160. The server 160 may be, for example, a data warehouse, and store the coordinate-related electrode ID data EIDD for a long time based on a quality guarantee period of a product or the like. Accordingly, a manufacturing process of a product may be tracked according to a life cycle of the product.

Furthermore, the server 160 may provide matching between the electrode ID EID, and roll maps of a previous process (e.g., an electrode process) of the first negative electrode roll ERN1, roll maps of a previous process of the positive electrode roll ERP, and roll maps of a previous process of the second negative electrode roll ERN2. Because the server 160 is a data warehouse, the server 160 may include history data (i.e., roll maps) for manufacturing the first negative electrode roll ERN1, history data (i.e., roll maps) for manufacturing the positive electrode roll ERP, and history data (i.e., roll maps) for manufacturing the second negative electrode roll ERN2.

Here, the roll maps may represent a process event of the first negative electrode sheet ESN1, the positive electrode sheet ESP, and the second negative electrode sheet ESN2, based on coordinates of positions on the first negative electrode sheet ESN1, the positive electrode sheet ESP, and the second negative electrode sheet ESN2. A process of manufacturing a secondary battery may be performed on the first negative electrode sheet ESN1, the positive electrode sheet ESP, and the second negative electrode sheet ESN2 as described above.

The roll maps may include event data indicating events of the roll-to-roll process of the electrode sheets ESN1, ESP and ESN2. Generally, the event data is generated according to the progress of a process and thus is time series data. Accordingly, data of process events may include values indicating the events and time values matched thereto. The time series data may be temporally ordered. Temporal ordering is a main feature of time series data and may be understood as organizing events in an order in which they occur and arrive to be processed. That is, the time series data may be stored based on a point in time when an event occurs (i.e., when inspection and measurement are performed or when an action of a process is performed), and the event may be matched to time values.

The roll maps may include data that represents a history of processes performed on the electrode sheet ESN1, ESP, and ESN2 and that relates to coordinates. Accordingly, the roll maps may enable feedback, feedforward, and tracking of a secondary battery manufacturing process.

The manufacture of a secondary battery involves a series of different processes, and a leading process affects the following process. Feed forward may hereinafter be understood as correcting the following process based on data generated according to a result of the leading process. In this case, when time series data of the leading process does not directly match a workpiece, an intermediate product, and a product of the real world, it is difficult to reflect the time series data of the leading process in the following process. Here, the workpiece may be an article provided as a result of each process, e.g., the electrode sheets ESN1, ESP and ESN2 on which the coating process, the roll press process, and the slitting process are performed. The intermediate product may be cut separators, electrodes, or an assembly thereof. The intermediate product may be a structure including a housing and an electrode assembly included in the housing (in some cases, the structure further includes an electrolyte). The product may be an article processed by the activation process to be operable as a secondary battery. The above-described definitions of the workpiece, the intermediate product, and the product are definitions thereof only in one aspect and thus should not be understood as excluding general definitions thereof.

For feedforward, time series data may be related to positions on workpieces, components, intermediate products, and products of the real world. In the roll maps, time series data such as measurement data may be related to coordinate data based on the amounts of movement (i.e., the amounts of input or the amounts of exhaustion) of the electrode sheets ESN1, ESP and ESN2. The roll map may allow the time series data to be related with coordinate data including coordinates of the positions on workpieces, the components, the intermediate products, and the products of the real-world. Accordingly, feedforward based on generation of the roll maps and the roll maps may improve the productivity and quality of a process by digitizing and objectifying aspects of the process that depend on an operator's discretion.

Furthermore, as described below, the roll maps may be cumulatively generated for workpieces, intermediate products, and products of unit processes to track process history of products (e.g., battery cells, battery modules, or battery packs) on the market.

The bi-cells BC may include the electrode ID EID on the first negative electrode tabs TN1, and the server 150 may include lot numbers and coordinates of positive electrodes and negative electrodes that are included in the bi-cells BC matching the electrode IDs EID. In other words, positive electrodes EPP and negative electrodes EPN that are included in the battery cell may be related to a roll map using the electrode ID EID. Accordingly, when an event such as a quality issue occurs in already shipped bi-cells BC (or a battery cell including the bi-cells BC), the history of collective data of the manufacture of the bi-cells BC may be retrieved based on an electrode ID.

Roll maps may be generated in units of lots. A lot is a production unit of the roll-to-roll process, and the first negative electrode roll ERN1, the positive electrode roll ERP, and the second negative electrode roll ERN2 loaded on the unwinders 111N1, 111P, and 111N are examples of the lot. Accordingly, the server 160 may be configured to store a roll map of the first negative electrode roll ERN1, the positive electrode roll ERP and the second negative electrode roll ERN2.

The servers 140, 150 and 160 may be implemented by hardware, firmware, software, or a combination thereof. For example, the servers 140, 150 and 160 may include a computing device such as a workstation computer, a desktop computer, a laptop computer, or a tablet computer. The servers 140, 150 and 160 may include a simple controller, a complex processor such as a microprocessor, a CPU, or a GPU, a processor configured by software, dedicated hardware, or firmware. The servers 140, 150 and 160 may be implemented, for example, by a general-purpose computer processor application-specific hardware such as a digital signal processor (DSP), a field-programmable gate array (FPGA) or an application-specific integrated circuit (ASIC).

The servers 140, 150, and 160 may include a physical server or a cloud server. The servers 140, 150 and 160 may provide data and an analysis result to an operator through various frameworks. A framework may include a protocol that supports data transmission so that a client device may visualize data through a user interface and provide updated visualization when new data is calculated by the servers 220 and 230. The protocol supporting data transmission may include HTML, JavaScript, and/or JSON, and the like.

The servers 140, 150 and 160 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

According to some embodiments, operations of the servers 140, 150 and 160 may be implemented by instructions stored in a machine-readable medium that is readable and executable by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The servers 140, 150 and 160 may include firmware, software, routines, and instructions for performing the above-described operation, or a process described below. For example, the servers 140, 150 and 160 may be instantiated in a memory.

However, the instantiation of the servers 140, 150 and 160 in the memory is only an example provided for convenience of description, and the operations of the servers 140, 150 and 160 may be caused by a computing device, distributed computing devices, a processor, or other types of devices for execution of firmware, software, routines, and instructions.

The secondary battery manufacturing system 10 may form a plug-in architecture together with an API for obtaining data to provide plug-and-play connection of the rotary encoders 121N1, 121P, and 121N2, the joint sensors 123N1, 123P, and 123N2, the electrode gap sensor 125, and the electrode ID reader 127. Accordingly, resources in a certain process step and a specific site may be easily transferred to a different process and a different site or new resources may be easily introduced into each process step and each site.

A data network between the components of the secondary battery manufacturing system 10 may include various types of communication channels, including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards. Those of ordinary skill in the art would be able to easily derive the secondary battery manufacturing system 100 that includes an integrated server that performs functions of the servers 150 and 160, based on the above description.

(Second Embodiment)

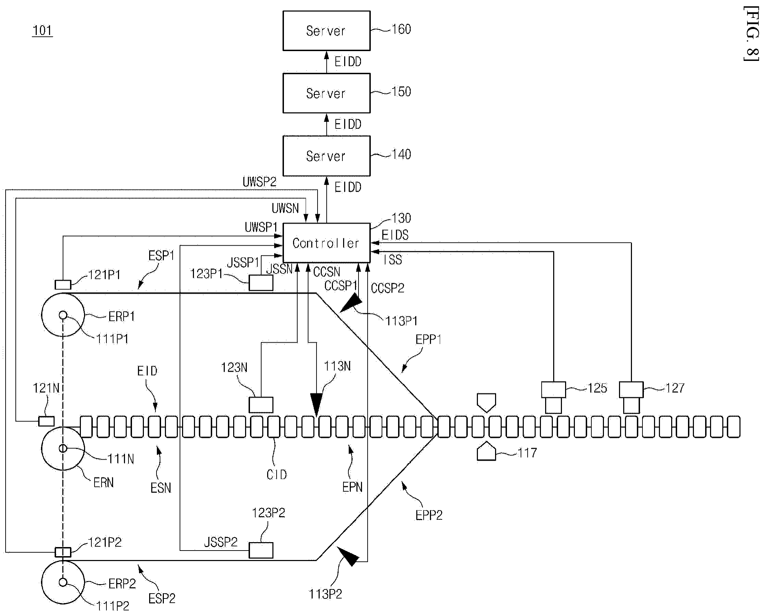

FIG. 8 illustrates a secondary battery manufacturing system according to example embodiments.

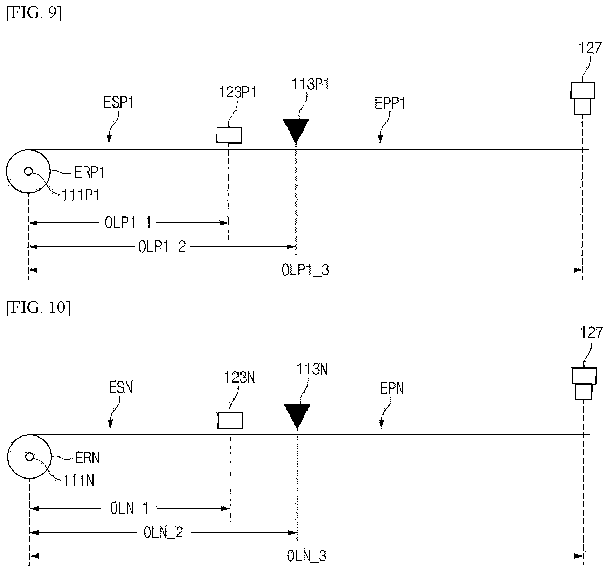

FIG. 9 illustrates relative positions of elements of a first electrode sheet ESP1.

FIG. 10 illustrates relative positions of elements of a second electrode sheet ESN.

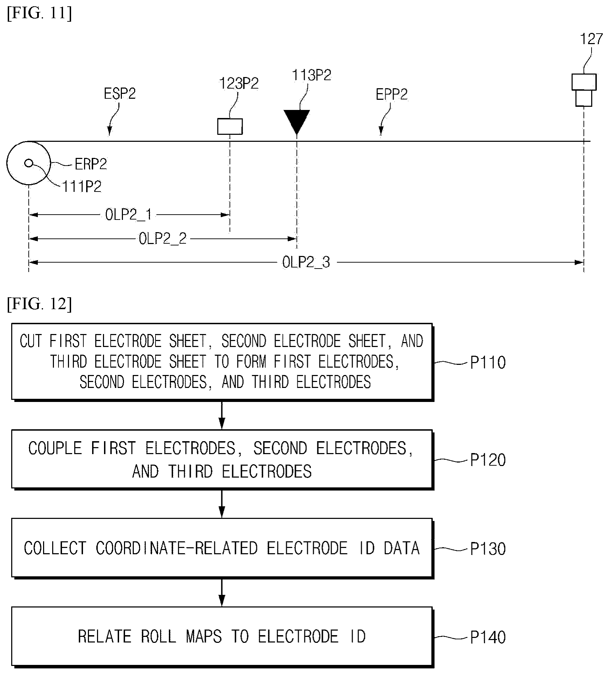

FIG. 11 illustrates relative positions of elements of a third electrode sheet ESP2.

Referring to FIG. 8, a secondary battery manufacturing system 101 may include a first positive electrode unwinder 111P1, a negative electrode unwinder 111N, a second positive electrode unwinder 111P2, electrode cutters 113P1, 113N, and 113P2, a separator cutter 117, rotary encoders 121P1, 121N, and 121P2, joint sensors 123P, 123N, and 123P2, an electrode gap sensor 125, an electrode ID reader 127, a controller 130, and servers 140, 150, and 160.

In the system of FIG. 8, guide rolls may also be provided to guide a separator sheet or electrode sheets to perform lamination. For simplicity of illustration, the guide rolls are not shown in FIG. 8. In addition, separator rolls and separator unwinders are not shown.

The present embodiment provides a manufacturing system for lamination of the A-type bi-cell of FIG. 3 in which one negative electrode is disposed between two positive electrodes with the same polarity. In the drawings, a first positive electrode roll ERP1, a negative electrode roll ERN, and a second positive electrode roll ERP2 are sequentially illustrated in a downward direction. The first positive electrode roll ERP1, the negative electrode roll ERN, and the second positive electrode roll ERP2 may be referred to as a first electrode roll, a second electrode roll and a third electrode roll, respectively. A first positive electrode sheet ESP1, a negative electrode sheet ESN, and a second positive electrode sheet ESP2 may be referred to as a first electrode sheet, a second electrode sheet, and a third electrode sheet, respectively. A first positive electrode EPP1, a negative electrode EPN, and a second positive electrode EPP2 may be referred to as a first electrode, a second electrode, and a third electrode, respectively.

The unwinders 111P1, 111N, and 111P2 may be configured to put roll-type materials into the secondary battery manufacturing system 101. More specifically, the unwinder 111P1 may be configured to unwind the first positive electrode sheet ESP1 from the first positive electrode roll ERP1, the unwinder 111N may be configured to unwind the negative electrode sheet ESN from the negative electrode roll ERN, and the unwinder 111P2 may be configured to unwind the second positive electrode sheet ESP2 from the second positive electrode roll ERP2. Although not shown, the separator unwinders 111S1 and 111S2 and the separator rolls SR1 and SR2 of FIG. 1 may be provided, and the unwinders 111S1 and 111S2 may be configured to unwind separator sheets SS1 and SS2 from separator rolls.

As described above, the first positive electrode roll ERP1, the negative electrode roll ERN and the second positive electrode roll ERP may be provided through a series of a secondary battery manufacturing processes. For example, the first positive electrode roll ERP1, the negative electrode roll ERN, and the second positive electrode roll ERP2 may be provided by the coating process, the roll pressing process, the selective slitting process, and the notching process.

In the notching process, first positive electrode tabs TP1, negative electrode tabs TN, and second positive electrode tabs TP2 may be formed. In the notching process, an electrode ID EID may be formed on the negative electrode tabs TN. The electrode ID EID may be formed by a method such as laser printing or ink printing. Accordingly, each of the negative electrode tabs TN may include the electrode ID EID. Unlike the negative electrode tabs TN, the positive electrode tabs TP1 and TP2 may not include the electrode ID EID to prevent a defect.

The electrode ID EID may include symbols representing sequence numbers of the negative electrode tabs TN. The symbols of the electrode ID EID may include Arabic numerals but are not limited thereto. The symbols of the electrode ID EID may include arbitrary characters providing information about the sequence numbers of the negative electrode tabs TN.

The first positive electrode cutter 113P1 may be configured to cut the first positive electrode sheet ESP1. A plurality of first positive electrodes EPP1 may be provided by cutting the first positive electrode sheet ESP1. The negative electrode cutter 113N may be configured to cut the negative electrode sheet ESN. A plurality of negative electrodes EPN may be provided by cutting the negative electrode sheet ESN. The second positive electrode cutter 113P2 may be configured to cut the second positive electrode sheet ESP2. A plurality of second positive electrodes EPP2 may be provided by cutting the second positive electrode sheet ESP2.

The controller 130 may control operations of the first positive electrode cutter 113P1, the negative electrode cutter 113N and the second positive electrode cutter 113P2 as described below and thus may be configured to count a cut of the first positive electrode sheet ESP1 by the first positive electrode cutter 113P1, a cut of the negative electrode sheet ESN by the negative electrode cutter 113N, and a cut of the second positive electrode sheet ESP2 by the second positive electrode cutter 113P2. For example, the controller 130 may be configured to receive a first cut count signal CCSP1 from the first positive electrode cutter 113P1, receive a second cut count signal CCSN from the negative electrode cutter 113N, and receive a third cut count signal CCSP2 from the second positive electrode cutter 113P2.

The cut first positive electrodes EPP1 and negative electrodes EPN may be electrically and physically separated from each other by, for example, the separator sheet SS1. The cut negative electrodes EPN and second positive electrodes EPP2 and may be electrically and physically separated from each other by, for example, the separator sheet SS2.

The separator cutter 117 may be configured to cut the separator sheets SS1 and SS2. Before the separator sheets SS1 and SS2 are cut by the separator cutter 117, a stacked structure of the separator sheets SS1 and SS2, the first positive electrodes EPP1, the negative electrodes EPN and the second positive electrodes EPP2 may be pressed by a nip roll (not shown) or the like. The A-type bi-cell BC of FIG. 3 including the first positive electrodes EPP1, the negative electrodes EPN, the second positive electrodes EPP2, and the separators SS1 and SS2 may be provided by cutting the separator sheets SS1 and SS2.

The first positive electrode rotary encoder 121P1 may be configured to sense an amount of rotation of the unwinder 111P1. The first positive electrode rotary encoder 121P1 may be configured to sense an amount of the first positive electrode sheet ESP1 unwound from the first positive electrode roll ERP1 by the unwinder 111P1. Accordingly, the first positive electrode rotary encoder 121P1 may be configured to generate a first input amount signal UWSP1 indicating a length of the first positive electrode sheet ESP1 unwound by the unwinder 111P1 (i.e., an input amount of the first positive electrode sheet ESP1). The first positive electrode rotary encoder 121P1 may be configured to transmit the first input amount signal UWSP1 to the controller 130.

The rotary encoder 121N may be configured to sense an amount of rotation of the unwinder 111N. The rotary encoder 121N may be configured to sense an amount of the negative electrode sheet ESN unwound from the negative electrode roll ERN by the unwinder 111N. Accordingly, the rotary encoder 121N may be configured to generate a second input amount signal UWSN indicating a length of the negative electrode sheet ESN unwound by the unwinder 111N (i.e., an input amount of the negative electrode sheet ESN). The rotary encoder 121N may be configured to transmit the second input amount signal UWSN to the controller 130.

The second positive electrode rotary encoder 121P2 may be configured to sense an amount of rotation of the unwinder 111P2. The second positive electrode rotary encoder 121P2 may be configured to sense an amount of the second positive electrode sheet ESP2 unwound from the second positive electrode roll ERP2 by the unwinder 111P2. Accordingly, the second positive electrode rotary encoder 121P2 may be configured to generate a third input amount signal UWSP2 indicating a length of the second positive electrode sheet ESP2 unwound by the unwinder 111P2 (i.e., an input amount of the second positive electrode sheet ESP2). The second positive electrode rotary encoder 121P2 may be configured to transmit the third input amount signal UWSP2 to the controller 130.

The first positive electrode joint sensor 123P1 may be configured to sense a joint of the first positive electrode sheet ESP1. Here, the first positive electrode sheet ESP1 may include a joint when the first positive electrode roll ERP1 is replaced with another (i.e., when a subsequent first positive electrode roll ERP1 is loaded on the unwinder 111P1), when an electrode is broken in a current process (i.e., during processing of the first positive electrode sheet ESP1 by the secondary battery manufacturing system 101), or when the electrode was broken in a previous process (i.e., during processing of the first positive electrode roll ERP1 before being loaded on the unwinder 111P1).

The first positive electrode joint sensor 123P1 may be, for example, a color sensor but is not limited thereto. The first positive electrode joint sensor 123P1 may be configured to generate a first joint sensing signal JSSP1. The first joint sensing signal JSSP1 may be transmitted to the controller 130.

The negative electrode joint sensor 123N may be configured to sense a joint of the negative electrode sheet ESN.

Here, the negative electrode sheet ESN may include joints when the negative electrode roll ERN is replaced with another (i.e., a subsequent negative electrode roll ERN is loaded on the unwinder 111N), when an electrode is broken in a current process (i.e., during processing of the negative electrode sheet ESN by the secondary battery manufacturing system 101), or when the electrode was broken in a previous process (i.e., during processing of the negative electrode roll ERN before being loaded on the unwinder 111N).

The negative electrode joint sensor 123N may be, for example, a color sensor but is not limited thereto. The negative electrode joint sensor 123N may be configured to generate a second joint sensing signal JSSN. The second joint sensing signal JSSN may be transmitted to the controller 130.

The second positive electrode joint sensor 123P2 may be configured to sense a joint of the second positive electrode sheet ESP2. Here, the second positive electrode sheet ESP2 may include a joint when the second positive electrode roll ERP2 is replaced with another (i.e., when a subsequent second positive electrode roll ERP2 is loaded on the unwinder 111P2), when an electrode is broken in a current process (i.e., during processing of the second positive electrode sheet ESP2 by the secondary battery manufacturing system 101), or when the electrode was broken in a previous process (i.e., during processing of the second positive electrode roll ERP2 before being loaded on the unwinder 111P2).

The second positive electrode joint sensor 123P2 may be, for example, a color sensor but is not limited thereto. The second positive electrode joint sensor 123P2 may be configured to generate a third joint sensing signal JSSP2. The third joint sensing signal JSSP2 may be transmitted to the controller 130.

The electrode gap sensor 125 may be configured to sense gaps between the first positive electrodes EPP1, the negative electrodes EPN, and the second positive electrodes EPP2. For example, the electrode gap sensor 125 may be configured to sense gaps between the first positive electrodes EPP1. As another example, the electrode gap sensor 125 may be configured to sense gaps between the negative electrodes EPN. As another example, the electrode gap sensor 125 may be configured to sense gaps between the second positive electrodes EPP2. As another example, the electrode gap sensor 125 may be configured to sense gaps between the first positive electrodes EPP1, gaps between the negative electrodes EPN, and gaps between the second positive electrodes EPP2.

The electrode gap sensor 125 may be configured to generate a gap sensing signal ISS. The electrode gap sensor 125 may be configured to transmit the gap sensing signal ISS to the controller 130.

The electrode ID reader 127 may be configured to sense an electrode ID EID. The electrode ID reader 127 may be configured to read a sequence number indicated by the electrode ID EID. The electrode ID reader 127 may be configured to generate an electrode ID sensing signal EIDS based on the sensing of the electrode ID EID. The electrode ID reader 127 may be configured to transmit the electrode ID sensing signal EIDS to the controller 130.

The controller 130 may be configured to control components of the secondary battery manufacturing system 101, e.g., the unwinders 111P1, 111N, 111P2, 111S1, and 111S2, the first positive electrode cutter 113P1, the negative electrode cutter 113N, the second positive electrode cutter 113P2, and the separator cutter 117.

The controller 130 may be in operative communication with the rotary encoders 121P1, 121N, and 121P2, the joint sensors 123P1, 123N, and 123P2, the electrode gap sensor 125, and the electrode ID reader 127 through a wired or wireless data network. The rotary encoders 121P1, 121N, and 121P2, the joint sensors 123P1, 123N, and 123P2, the electrode gap sensor 125, and the electrode ID reader 127 may be configured to collect data from equipment, a workpiece, an intermediate product, and a product in the secondary battery manufacturing system 101 or to generate a signal for collecting data therefrom.

As a non-limiting example, the controller 130 may be a programmable logic controller (PLC).

The controller 130 may include a power supply, a CPU, an input interface, an output interface, a communication interface, and memory devices. For an operation of the controller 130, power may be supplied to other elements of the controller 130, such as the CPU, the input interface, the output interface, the communication interface, and the memory devices.

However, embodiments are not limited thereto, and the controller 130 may include one of a simple controller, a complex processor such as a microprocessor, a CPU or a GPU, a processor configured by software, dedicated hardware, and firmware.

Cutting may be performed by the first positive electrode cutter 113P1, the negative electrode cutter 113N, and the second positive electrode cutter 113P2, based on a pitch that is a predetermined repetition unit. The pitch may be a minimum unit length by which the same shape or structure is repeated, similar to a machine-direction length between positive electrode tabs TP1 and TP2 of neighboring positive electrodes EPP1 and EPP2. The positive electrode sheets ESP1 and ESP2 are cut to substantially the same target length, and input amounts of the positive electrode sheets ESP1 and ESP2 may be proportional to cut counts (e.g., the first cut count signal CCSP1 and the third cut count signal CCSP2) of the positive electrode cutters 113P1 and 113P2. Similarly, because the negative electrode sheet ESN is cut to substantially the same target length, an input amount of the negative electrode sheet ESN may be proportional to a cut count of the negative electrode cutter 113N (e.g., the second cut count signal CCSN).

More specifically, the input amount of the first positive electrode sheet ESP1 may be the sum of a product of a cut count Cutcount_P1 and a pitch Pitch_P1 and an offset length OLP1_2 as shown in Equation 4 below. Here, the offset length OLP1_2 may be a length of the first positive electrode sheet ESP1 between the unwinder 111P1 and the first positive electrode cutter 113P1.

[Equation 4]

$$\text{Input amount\_P1}=\text{OLP1\_2}+(\text{Pitch\_P1})\times(\text{Cutcount\_P1})$$

The input amount of the negative electrode sheet ESN may be the sum of a product of a cut count Cutcount_N and a pitch Pitch_N and an offset length OLN_2 as shown in Equation 5 below. Here, the offset length OLN_2 may be a length of the negative electrode sheet ESN between the unwinder 111N and the negative electrode cutter 113N.

[Equation 5]

$$\text{Input amount\_N}=\text{OLN\_2}+(\text{Pitch\_N})\times(\text{Cutcount\_N})$$

Similarly, the input amount of the second positive electrode sheet ESP2 may be the sum of a product of a cut count Cutcount_P2 and a pitch Pitch_P2 and an offset length OLP2_2 as expressed in Equation 5 below. Here, the offset length OLP2_2 may be a length of the second positive electrode sheet ESP2 between the unwinder 111P2 and the second positive electrode cutter 113P2.

[Equation 6]

$$\text{Input amount\_P2}=\text{OLP2\_2}+(\text{Pitch\_P2})\times(\text{Cutcount\_P2})$$

In another example, the input amount of the first positive electrode sheet ESP1 may be determined from the first input amount signal UWSP1 of the rotary encoder 121P1, the input amount of the negative electrode sheet ESN may be determined from the second input amount signal UWSN of the rotary encoder 121N, and the input amount of the second positive electrode sheet ESP2 may be determined from the third input amount signal UWSP2 of the rotary encoder 121P2.

The input amount of the first positive electrode sheet ESP1 may indicate a relative position of a part of the first positive electrode sheet ESP1, which is unwound by the unwinder 111P1, on the first positive sheet ESP1. The controller 130 may be configured to determine a coordinate of an event occurring on the first positive electrode sheet ESP1, based on the input amount of the first positive electrode sheet ESP1 and the offset lengths OLP1_1, OLP1_2, and OLP1_3.

For example, a coordinate of a part of the first positive electrode sheet ESP1 sensed by the first positive electrode joint sensor 123P1 (i.e., a coordinate on the first positive electrode sheet ESP1 derived from the first joint sensing signal JSSP1) may be determined by performing an operation (e.g., addition or subtraction) on the input amount of the first positive electrode sheet ESP1 and the offset length OLP1_1. The offset length OLP1_1 may be a length of the first positive electrode sheet ESP1 between the unwinder 111P1 and the part of the first positive electrode sheet ESP1 sensed by the first positive electrode joint sensor 123P1.

For example, a coordinate of a part of the first positive electrode sheet ESP1 cut by the first positive electrode cutter 113P1 may be determined by performing an operation (e.g., addition or subtraction) on the input amount of the first positive electrode sheet ESP1 and the offset length OLP1_2. The offset length OLP1_2 may be a length of the first positive electrode sheet ESP1 between the unwinder 111P1 and the part of the first positive electrode sheet ESP1 cut by the first positive electrode cutter 113P1.

For example, a coordinate (e.g., a conversion coordinate or an equivalent coordinate) of the first positive electrode EPP1 coupled to the negative electrode EPN sensed by the electrode ID reader 127 may be determined by performing an operation (e.g., addition or subtraction) on the input amount of the first positive electrode sheet ESP1 and the offset length OLP1_3. The offset length OLP1_3 may be a length (e.g., a conversion length or equivalent length) of the first positive electrode sheet ESP1 between the unwinder 111P1 and the first positive electrode EPP1 coupled to the negative electrode EPN sensed by the electrode ID reader 127.

In this case, there are first positive electrodes EPP1 between the first positive electrode cutter 113P1 and the electrode ID reader 127 rather than the first positive electrode sheet ESP1. Therefore, the offset length OLP1_3 may not be a length of an actual positive electrode sheet ESP1 but may be an equivalent length calculated based on a cut count of the first positive electrode cutter 113P1 or determined from the first input amount signal UWSP1.

The input amount of the negative electrode sheet ESN may indicate a relative position of a part of the negative electrode sheet ESN, which is unwound by the unwinder 111N, on the negative electrode sheet ESN. The controller 130 may be configured to determine a coordinate of an event occurring on the negative electrode sheet ESN based on the input amount of the negative electrode sheet ESN and offset lengths OLN_1, OLN_2, and OLN_3.

For example, a coordinate of a part of the negative electrode sheet ESN sensed by the joint sensor 123N (i.e., a coordinate on the negative electrode sheet ESN derived from the second joint sensing signal JSSN) may be determined by performing an operation (e.g., addition or subtraction) on the input amount of the negative electrode sheet ESN and the offset length OLN_1. The offset length OLN_1 may be a length of the negative electrode sheet ESN between the unwinder 111N and the part of the negative electrode sheet ESN sensed by the joint sensor 123N.

For example, a coordinate of a part of the negative electrode sheet ESN cut by the negative electrode cutter 113N may be determined by performing an operation (e.g., addition or subtraction) on the input amount of the negative electrode sheet ESN and the offset length OLN_2. The offset length OLN_2 may be a length of the negative electrode sheet ESN between the unwinder 111N and the part of the negative electrode sheet ESN cut by the negative electrode cutter 113N.

For example, a coordinate (e.g., a conversion coordinate or an equivalent coordinate) of the negative electrode EPN sensed by the electrode ID reader 127 may be determined by performing an operation (e.g., addition or subtraction) on the input amount of the negative electrode sheet ESN and the offset length OLN_3. The offset length OLN_3 may be a length (e.g., a conversion length or equivalent length) of the negative electrode sheet ESN between the unwinder 111N and the negative electrode EPN sensed by the electrode ID reader 127.

In this case, there are negative electrodes EPN between the negative electrode cutter 113N and the electrode ID reader 127 rather than the negative electrode sheet ESN. Therefore, the offset length OLN_3 may not be a length of an actual negative electrode sheet ESN but may be an equivalent length calculated based on a cut count of the negative electrode cutter 113N or determined from the second input amount signal UWSN.

The input amount of the second positive electrode sheet ESP2 may indicate a relative position of a part of the second positive electrode sheet ESP2, which is unwound by the unwinder 111P2, on the second positive sheet ESP2. The controller 130 may be configured to determine a coordinate of an event occurring on the second positive electrode sheet ESP2, based on the input amount of the second positive electrode sheet ESP2 and offset lengths OLP2_1, OLP2_2, and OLP2_3.

For example, a coordinate of a part of the second positive electrode sheet ESP2 sensed by the second positive electrode joint sensor 123P2 (i.e., a coordinate on the second positive electrode sheet ESP2 derived from the third joint sensing signal JSSP2) may be determined by performing an operation (e.g., addition or subtraction) on the input amount of the second positive electrode sheet ESP2 and the offset length OLP2_1. The offset length OLP2_1 may be a length of the second positive electrode sheet ESP2 between the unwinder 111P2 and the part of the second positive electrode sheet ESP2 sensed by the second positive electrode joint sensor 123P2.

For example, a coordinate of a part of the second positive electrode sheet ESP2 cut by the second positive electrode cutter 113P2 may be determined by performing an operation (e.g., addition or subtraction) on the input amount of the second positive electrode sheet ESP2 and the offset length OLP2_2. The offset length OLP2_2 may be a length of the second positive electrode sheet ESP2 between the unwinder 111P2 and the part of the second positive electrode sheet ESP2 cut by the second positive electrode cutter 113P2.

For example, a coordinate (e.g., a conversion coordinate or an equivalent coordinate) of the second positive electrode EPP2 coupled to the negative electrode EPN sensed by the electrode ID reader 127 may be determined by performing an operation (e.g., addition or subtraction) on the input amount of the second positive electrode sheet ESP2 and the offset length OLP2_3. The offset length OLP2_3 may be a length (e.g., a conversion length or equivalent length) of the second positive electrode sheet ESP2 between the unwinder 111P2 and the second positive electrode EPP2 sensed by the electrode ID reader 127.

In this case, there are second positive electrodes EPP2 between the second positive electrode cutter 113P2 and the electrode ID reader 127 rather than the second positive electrode sheet ESP2. Therefore, the offset length OLP2_3 may not be a length of an actual positive electrode sheet ESP2 but may be an equivalent length calculated based on a cut count of the second positive electrode cutter 113P2 or determined from the third input amount signal UWSP2.

Coordinates on the positive electrode sheets ESP1 and ESP2 may match parts of the positive electrode sheets ESP1 and ESP2. That is, arbitrary points on the positive electrode sheets ESP1 and ESP2 may have coordinates. The coordinates may be one-dimensional (1D) quantities in a machine direction MD (or a longitudinal direction) of a sheet material SM but is not limited thereto. For example, the coordinates may be two-dimensional (2D) quantities in the machine direction MD and a transverse direction TD (or a width direction) of the negative electrode sheet ESN.

Coordinates on the negative electrode sheet ESN may be matched to parts of the negative electrode sheet ESN. That is, arbitrary points on the negative electrode sheet ESN may have coordinates. The coordinates may be one-dimensional (1D) quantities in a machine direction MD (or a longitudinal direction) of a sheet material SM, but is not limited thereto. For example, the coordinates may be two-dimensional (2D) quantities in the machine direction MD and a transverse direction TD (or a width direction) of the negative electrode sheet ESN.

In the present embodiment, only a negative electrode tab TN of the negative electrode EPN between the first positive electrode EPP1 and the second positive electrode EPP2 includes an electrode ID. Because a size of the negative electrode EPN is greater than those of the positive electrodes EPP1 and EPP2, the electrode ID of the negative electrode tab TN may be identified by an electrode ID reader on the equipment.

The controller 130 may be configured to collect coordinate-related electrode ID data EIDD, based on an electrode ID sensing signal EIDS sensed in the negative electrode EPN, a first input amount of the first positive electrode sheet ESP1, a second input amount of the negative electrode sheet ESN, and a third input amount of the second positive electrode sheet ESP2.

As described above, the first input amount of the first positive electrode sheet ESP1 may be calculated based on a cut count of the first positive electrode cutter 113P1 or be determined by the first input amount signal UWSP1.

As described above, the input amount of the negative electrode sheet ESN may be calculated based on a cut count of the negative electrode cutter 113N or be determined by the second input amount signal UWSN.

As described above, the third input amount of the second positive electrode sheet ESP2 may be calculated based on a cut count of the second positive electrode cutter 113P2 or be determined by the third input amount signal UWSP2.

According to example embodiments, the controller 130 may be configured to determine a coordinate of the first positive electrode EPP1 sensed by the electrode ID reader 127 by performing an operation on an input amount of the first positive electrode sheet ESP1 and the offset length OLP1_3. The controller 130 may be configured to match the coordinate of the first positive electrode EPP1 coupled to the negative electrode EPN sensed by the electrode ID reader 127 to the electrode ID sensing EIDS.

According to example embodiments, the controller 130 may be configured to determine a coordinate of the negative electrode EPN sensed by the electrode ID reader 127 by performing an operation on the input amount of the negative electrode sheet ESN and the offset length OLN_3. The controller 130 may be configured to match the coordinate of the negative electrode EPN sensed by the electrode ID reader 127 to the electrode ID sensing signal EIDS.

According to example embodiments, the controller 130 may be configured to determine a coordinate of the second positive electrode EPP2 coupled to the negative electrode EPN sensed by the electrode ID reader 127 by performing an operation on the input amount of the second positive electrode sheet ESP2 and the offset length OLP2_3. The controller 130 may be configured to match the coordinates of the second positive electrode EPP2 to the electrode ID sensing signal EIDS.

Here, the coordinate of the first positive electrode EPP1 may be a start or end coordinate of the first positive electrode EPP1 or a coordinate of a part of the first positive electrode EPP1 overlapping the negative electrode tab TN. The coordinate of the first positive electrode EPP1 may include two or more of the start and end coordinates of the first positive electrode EPP1, and the coordinate of the part of the first positive electrode EPP1 overlapping the negative electrode tab TN.

The coordinate of the negative electrode EPN may be a start or end coordinate of the negative electrode EPN or a coordinate of the negative electrode tab TN with an electrode ID. The coordinate of the negative electrode EPN may include two or more of the start and end coordinates of the negative electrode EPN and the coordinate of the negative electrode tab TN with the electrode ID.

The coordinate of the second positive electrode EPP2 may be a start or end coordinate of the second positive electrode EPP2 or a coordinate of a part of the second positive electrode EPP2 overlapping the negative electrode tab TN. The coordinate of the second positive electrode EPP2 may include two or more of the start and end coordinates of the second positive electrode EPP2, and the coordinate of the part of the second positive electrode EPP2 overlapping the negative electrode tab TN.

For matching the coordinate of the first positive electrode sheet ESP1, the coordinate of the negative electrode sheet ESN, and the coordinate of the second positive electrode sheet ESP2 to an electrode ID EID, a lot number of the first positive electrode roll ERP1 from which the first positive electrode sheet ESP1 is unwound, a lot number of the negative electrode roll ERN from which the negative electrode sheet ESN is unwound, and a lot number of the second positive electrode roll ERP2 from which the second positive electrode sheet ESP2 is unwound should be determined. The first joint sensing signal JSSP1, the second joint sensing signal JSSN, and the third joint sensing signal JSSP2 may be used to identify lots. According to example embodiments, the controller 130 may update the lot numbers of the first positive electrode roll ERP1, the negative electrode roll ERN, and the second positive electrode roll ERP2, based on the first joint sensing signal JSSP1, the second joint sensing signal JSSN, and the third joint sensing signal JSSP2. Accordingly, the coordinates of the first positive electrode sheet ESP1, the negative electrode sheet ESN and the second positive electrode sheet ESP2 may be reset based on the first joint sensing signal JSSP1, the second joint sensing signal JSSN, and the third joint sensing signal JSSP2.

The offset length OLP1_1, the offset length OLN_1, and the offset length OLP2_1 may be used to update the lot numbers and reset the coordinates of the first positive electrode sheet ESP1, the negative electrode sheet ESN and the second positive electrode sheet ESP2. Here, the offset length OLP1_1 may be a length of the first positive electrode sheet ESP1 between the unwinder 111P1 and the first positive electrode joint sensor 123P1. Here, the offset length OLN_1 may be a length of the negative electrode sheet ESN between the unwinder 111N and the negative electrode joint sensor 123N. Here, the offset length OLP2_1 may be a length of the second positive electrode sheet ESP2 between the unwinder 111P2 and the second positive electrode joint sensor 123P2.

More specifically, when a new negative electrode roll ERN is loaded on the unwinder 111N, the new negative electrode roll ERN should be connected to a remaining negative electrode sheet ESN of a previous lot using joints to continue the roll-to-roll process. For example, it may be determined that a part of a negative electrode sheet ESN following a joint of a negative electrode sheet ESN sensed first after loading a negative electrode roll ERN of a new lot on the unwinder 111N has been unwound from the newly loaded negative electrode roll ERN. Accordingly, when the second joint sensing signal JSSN is generated after the loading of the new negative electrode roll ERN, the controller 130 may be configured to match the electrode ID EID to a coordinate of a negative electrode sheet ESN of a subsequent lot. An electrode ID EID of each of negative electrodes EPN coupled to positive electrodes EPP1,EPP2 may belong to another lot, based on the loading of the negative electrode roll ERN and the sensing of a joint.

Similarly, when a new positive electrode roll ERP1 or ERP2 is loaded on the unwinder 111P1 or 111P2, the new positive electrode roll ERP1 or ERP2 should be connected to a remaining positive electrode sheet ESP1 or ESP2 of a previous lot using a joint for the continuation of the roll-to-roll process . For example, it may be determined that a part of a positive electrode sheet ESP1 or ESP2 following a joint of a positive electrode sheet ESP1 or ESP2 sensed first after loading a positive electrode roll ERP1 or ERP2 of a new lot on the unwinder 111P1 or 111P2 has been unwound from the newly loaded positive electrode roll ERP1 or ERP2. Accordingly, when the joint sensing signal JSSP1 or JSSP2 is generated after loading the new positive electrode roll ERP1 or ERP2, the controller 130 may be configured to match the electrode EID to a coordinates of a positive electrode sheet ESP1 or ESP2 of a subsequent lot.

The coordinate-related electrode ID data EIDD may include the electrode ID EID of the negative electrode EPN, and the coordinate of the negative electrode EPN, the coordinate of the first positive electrode EPP1, and the coordinate of the second positive electrode EPP2 that match the electrode ID EID of the negative electrode EPN.

The server 140 may be configured to relay communication between the controller 130 and the server 150.

The server 150 may be configured to store the coordinate-related electrode ID data EIDD. The server 150 may be configured to process the coordinate-related electrode ID data EIDD. The server 150 may be configured to transmit the coordinate-related electrode ID data EIDD to the server 160. The server 160 may be, for example, a data warehouse, and store the coordinate-related electrode ID data EIDD for a long time based on a quality guarantee period of a product or the like. Accordingly, a manufacturing process of the product can be tracked according to a life cycle of the product.

Furthermore, the server 160 may provide matching between the electrode ID EID, and roll maps of a previous process (e.g., an electrode process) of the first positive electrode roll ERP1, roll maps of a previous process of the negative electrode roll ERN, and roll maps of a previous process of the second positive electrode roll ERP2. Because the server 160 is a data warehouse, the server 160 may include history data (i.e., roll maps) for manufacturing the first positive electrode roll ERP1, history data (i.e., roll maps) for manufacturing the negative electrode roll ERN, and history data (i.e., roll maps) for manufacturing the second positive electrode roll ERP2.

Here, the roll maps may represent a process event of the first positive electrode sheet ESP1, the negative electrode sheet ESN, and the second positive electrode sheet ESP2, based on coordinates of positions on the first positive electrode sheet ESP1, the negative electrode sheet ESN, and the second positive electrode sheet ESP2.

The roll maps may include event data indicating events of the roll-to-roll process of the electrode sheets ESP1, ESN and ESP2.

The roll maps may include data that represents a history of processes performed on the electrode sheet ESP1, ESN, and ESP2 and that relates to coordinates. Accordingly, the roll maps enable feedback, feedforward, and tracking of a secondary battery manufacturing process.

In the roll maps, time series data such as measurement data may be related to coordinate data based on the amounts of movement (i.e., the amounts of input or the amounts of exhaustion) of the electrode sheets ESP1, ESN and ESP2.

Bi-cells BC may include the electrode ID EID on the negative electrode tabs TN, and the server 150 may include lot numbers and coordinates of positive electrodes and negative electrodes that are included in the bi-cells BC matching the electrode ID EID. In other words, positive electrodes EPP1 and EPP2 and negative electrodes EPN that are included in the battery cell may be related to a roll map using the electrode ID EID. Accordingly, when an event such as a quality issue occurs in already shipped bi-cells BC (or a battery cell including the bi-cells BC), the history of collective data of the manufacture of the bi-cells BC may be retrieved based on an electrode ID.

Roll maps may be generated in units of lots. A lot is a production unit of the roll-to-roll process, and the first positive electrode roll ERP1, the negative electrode roll ERN, and the second positive electrode roll ERP2 loaded on the unwinders 111P1, 111N and 111P2 are examples of the lot. Accordingly, the server 160 may be configured to store a roll map of the first positive electrode roll ERP1, the negative electrode roll ERN and the second positive electrode roll ERP2.

The servers 140, 150 and 160 may be implemented by hardware, firmware, software, or a combination thereof.

(Third Embodiment)

FIG. 12 is a flowchart of a secondary battery manufacturing method according to example embodiments.

Referring to FIGS. 4 and 12, in P110, a first electrode sheet (the first negative electrode sheet ESN1), a second electrode sheet (the positive electrode sheet ESP), and a third electrode sheet (the second negative electrode sheet ESN2) may be cut to form a plurality of first electrodes (first negative electrodes EPN1), a plurality of second electrodes (positive electrodes EPP), and a plurality of third electrodes (second negative electrodes EPN2).

Referring to FIGS. 8 and 12, in P110, a first electrode sheet (the first positive electrode sheet ESP1), a second electrode sheet (the negative electrode sheet ESN) and a third electrode sheet (the second positive electrode sheet ESP2) may be cut to form a plurality of first electrodes (first positive electrodes EPP1), a plurality of second electrodes (negative electrodes EPN) and a plurality of third electrodes (second positive electrodes(EPPN2).

As described above, the first electrodes and the third electrodes have the same polarity, and a polarity of the second electrodes is opposite to the polarity of the first electrodes and the third electrodes. An electrode ID may be provided on a negative electrode. An electrode ID may be provided on a first or third negative electrode in the embodiment of FIG. 4, and be provided on a negative electrode between first and second positive electrodes in the embodiment of FIG. 8.

The first electrodes, the second electrodes, and the third electrodes may be cut to a substantially constant pitch by corresponding cutters. The first electrodes, the second electrodes, and the third electrodes may include first electrode tabs, second electrode tabs, and third electrode tabs, respectively.

Next, in P120, the first electrodes, the second electrodes, and the third electrodes may be coupled to one another.

For example, the first negative electrodes EPN1, the positive electrodes EPP, and the second negative electrodes EPN1 may be coupled to one another. For example, the first positive electrodes EPP1, the negative electrodes EPN, and the second positive electrodes EPP2 may be coupled to one another.

A plurality of positive electrodes and a plurality of negative electrodes may be coupled together with the separator sheets SS1 and SS2 to prevent a short circuit. The plurality of positive electrodes, the plurality of negative electrodes, and the separator sheets SS1 and SS2 may be pressed by a nip roll. A bi-cell BC may be provided by cutting the separator sheets SS1 and SS2 by the separator cutter 117.

Next, in P130, coordinate-related electrode ID data EIDD may be collected. The coordinate-related electrode ID data EIDD may be collected by matching coordinates of the positive electrodes and coordinates of the negative electrodes to an electrode ID EID. The coordinate-related electrode ID data EIDD may be collected by the controller 130 and stored in the servers 150 and 160.

Next, in P140, roll maps may be related to an electrode ID of the negative electrodes. The roll maps may be produced in an electrode process (i.e., coating, roll pressing, and selective slitting) and the notching process for the manufacture of a positive electrode roll and a negative electrode roll. The electrode ID EID may match a coordinate of at least one of a first electrode sheet, a second electrode sheet, and a third electrode sheet, i.e., at least one of coordinates of a part of a first electrode, a part of a second electrode, and a part of a third electrode that correspond to the electrode ID EID. The roll maps allow coordinate-based retrieval, and thus, a subsequent-battery-cell assembly process using the bi-cell BC, an activation process, and an electrode process and an assembly process performed on shipped battery cells based on the electrode ID EID can be tracked.

(Fourth Embodiment)

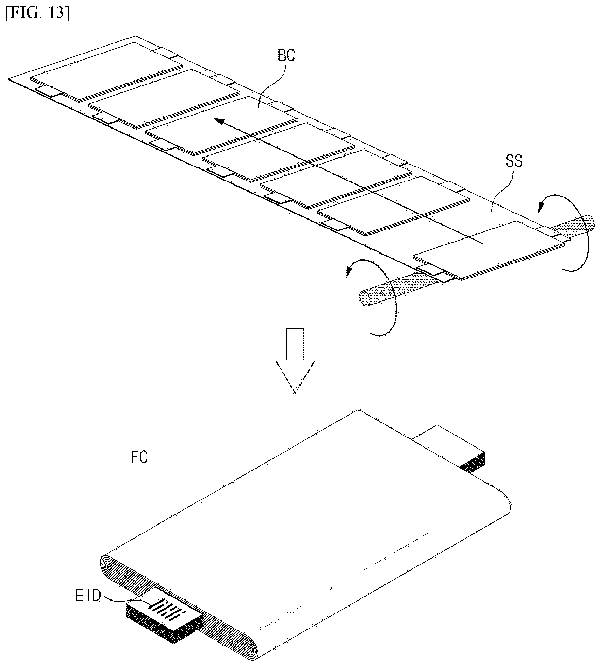

FIG. 13 illustrates an example of an electrode assembly including an electrode with a coordinate-related electrode ID.

FIG. 13 is a schematic diagram illustrating a process of manufacturing a folding cell FC, which is a type of a so-called electrode assembly.

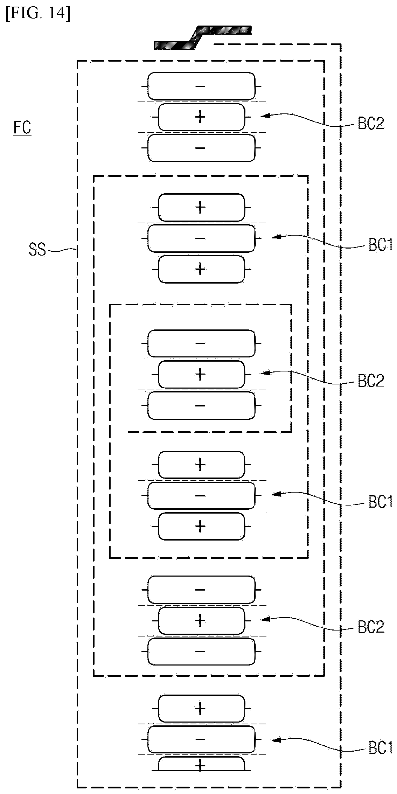

FIG. 14 is a schematic view of a stacked structure of the electrode assembly of FIG. 13.

As shown in the drawings, a plurality of bi-cells BC, which are unit cells, may be arranged on a second separator sheet SS and thereafter be rolled (folded) using the second separator sheet SS to manufacture a folding cell FC having a structure in which the plurality of bi-cells BC are stacked.

The bi-cells BC may include: a first electrode; a second electrode coupled to the first electrode with a separator therebetween, and having a polarity different from that of the first electrode; and a third electrode coupled to the second electrode with a separator therebetween, and having a polarity that is different from the polarity of the second electrode and is same as the polarity of the first electrode. One of the first to third electrodes may have an electrode ID. The electrode ID may match at least one of coordinates of the first to third electrodes. The coordinates may indicate positions of the first to third electrodes moved when the first, second and third electrodes are coupled to one another with the separators therebetween, and the at least one coordinate matching the electrode ID may indicate a position of at least one of the first to third electrodes corresponding to the at least one coordinate in a process when the electrode ID is sensed.

That is, an electrode ID may be provided on a part (electrode tab) of at least one electrode included in the bi-cells and be related to coordinates and thus match coordinates of parts of electrodes included in the bi-cells. Therefore, the quality of an intermediate product may be tracked in relation to a roll map of each electrode in a previous process, based on the electrode ID of each of the bi-cells.

The bi-cells may be A-type bi-cells BC1 in which one negative electrode is disposed between two positive electrodes or C-type bi-cells BC2 in which one positive electrode is disposed between two negative electrodes.

In a folding cell FC of FIG. 14, a second separator sheet SS extends in a spiral shape.

The bi-cells may be vertically stacked with the second separator sheet SS interposed therebetween.

The bi-cells may be positioned between spiral arms of the second separator sheet SS to be sequentially covered with the second separator sheet SS extending in the spiral shape.

In the electrode assembly, the A-type bi-cell BC1 and the C-type bi-cell BC2 may be alternately stacked with the second separator sheet SS interposed therebetween.

Referring to FIG. 13, an electrode ID EID on a bi-cell BC (e.g., an electrode tab part) exposed on uppermost end of the folding cell FC may be allocated as a representative ID (folding cell ID) of the folding cell FC.

The folding cell FC with the folding cell ID may be related to an electrode ID of bi-cells included in the folding cell FC. Furthermore, an electrode process, a subsequent-assembly process and an active processes, and the battery cells manufactured by the above processes may be tracked based on the electrode ID EID and the folding cell ID.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

(Reference Numerals)

100, 101: secondary battery manufacturing system
111N1, 111P, 111N2, 111S1, 111S2: unwinder
113N1: first negative electrode cutter, 113P: positive electrode cutter, 113N2: second negative electrode cutter
115: guide roll
117: separator cutter
121N1, 121P, 121N2: rotary encoder
123N1, 123P, 123N2: joint detection sensor
125: electrode gap sensor
127: electrode ID reader
130: controller
140, 150, 160: server
FC: folding cell
BC1: A-type bi-cell
BC2: C-type bi-cell
SS: second separator sheet

**Claims**

1. A secondary battery manufacturing system comprising:

a first electrode cutter configured to cut a first electrode sheet unwound from a first electrode roll to provide a plurality of first electrodes;
a second electrode cutter configured to cut a second electrode sheet unwound from a second electrode roll to provide a plurality of second electrodes;
a third electrode cutter configured to cut a third electrode sheet unwound from a third electrode roll to provide a plurality of third electrodes;
an electrode identifier (ID) reader configured to sense an electrode ID of an electrode tab of the first, second or third electrodes selected from among the plurality of first electrodes, the plurality of second electrodes, and the plurality of third electrodes; and
a controller configured to collect coordinate-related electrode ID data, based on a first input amount of the first electrode sheet, a second input amount of the second electrode sheet, a third input amount of the third electrode sheet, and an electrode ID sensing signal.

2. The secondary battery manufacturing system of claim 1, wherein the first electrodes and the third electrodes have the same polarity, and
the second electrodes have a polarity different from the polarity of the first and third electrodes.

3. The secondary battery manufacturing system of claim 1, wherein the electrode ID is provided on each of the first electrodes and the third electrodes or provided only on the second electrodes.

4. The secondary battery manufacturing system of claim 1, wherein the first input amount of the first electrode sheet is determined based on a cut count of the first electrode cutter,

the second input amount of the second electrode sheet is determined based on a cut count of the second electrode cutter, and
the third input amount of the third electrode sheet is determined based on a cut count of the third electrode cutter.

5. The secondary battery manufacturing system of claim 4, wherein the first input amount of the first electrode sheet is calculated based on a pitch of the plurality of first electrodes and the cut count of the first electrode cutter,

the second input amount of the second electrode sheet is calculated based on a pitch of the plurality of second electrodes and the cut count of the second electrode cutter, and
the third input amount of the third electrode sheet is calculated based on a pitch of the plurality of third electrodes and the cut count of the third electrode cutter.

6. The secondary battery manufacturing system of claim 1, further comprising:

a first rotary encoder configured to generate a first input amount signal indicating the first input amount of the first electrode sheet;
a second rotary encoder configured to generate a second input amount signal indicating the second input amount of the second electrode sheet; and
a third rotary encoder configured to generate a third input amount signal indicating the third input amount of the third electrode sheet.

7. The secondary battery manufacturing system of claim 1, wherein the coordinate-related electrode ID data comprises the electrode ID and at least one of coordinates of the first to third electrodes matching the electrode ID.

8. The secondary battery manufacturing system of claim 1, further comprising a server configured to store the coordinate-related electrode ID data.

9. The secondary battery manufacturing system of claim 8, wherein the server is configured to store a roll map of the first electrode roll for manufacture of the first electrode roll, a roll map of the second electrode roll for manufacture of the second electrode roll, and a roll map of the third electrode roll for manufacture of the third electrode roll.

10. The secondary battery manufacturing system of claim 9, wherein the server is configured to match the roll map of the first electrode roll, the roll map of the second electrode roll, and the roll map of the third electrode roll to the electrode ID.

11. A secondary battery manufacturing method comprising:

cutting a first electrode sheet, a second electrode sheet, and a third electrode sheet to form a plurality of first electrodes, a plurality of second electrodes, and a plurality of third electrodes;
combining the plurality of first electrodes, the plurality of second electrodes, and the plurality of third electrodes; and
collecting coordinate-related electrode identifier (ID) data,
wherein a plurality of electrodes selected from among the plurality of first electrodes, the plurality of second electrodes, and the plurality of third electrodes comprises an electrode tab with an electrode ID, and
the coordinate-related electrode ID data comprises the electrode ID and at least one of coordinates of the first to third electrodes matching the electrode ID.

12. The secondary battery manufacturing method of claim 11, wherein the coordinate-related electrode ID data is collected based on a first input amount of the first electrode sheet, a second input amount of the second electrode sheet, a third input amount of the third electrode sheet, and an electrode ID sensing signal, and
the electrode ID sensing signal is generated based on sensing of the electrode ID.

13. The secondary battery manufacturing method of claim 12, wherein the first input amount of the first electrode sheet is determined based on a cut count of a first electrode cutter configured to cut the first electrode sheet,

the second input amount of the second electrode sheet is determined based on a cut count of a second electrode cutter configured to cut the second electrode sheet, and
the third input amount of the third electrode sheet is determined based on a cut count of a third electrode cutter to cut the third electrode sheet.

14. The secondary battery manufacturing method of claim 13, wherein the first input amount of the first electrode sheet is calculated based on a pitch of the plurality of first electrodes and the cut count of the first electrode cutter,

the second input amount of the second electrode sheet is calculated based on a pitch of the plurality of second electrodes and the cut count of the second electrode cutter, and
the third input amount of the third electrode sheet is calculated based on a pitch of the plurality of third electrodes and the cut count of the third electrode cutter.

15. The secondary battery manufacturing method of claim 12, wherein the first input amount of the first electrode sheet is determined by a first input amount signal generated by a first rotary encoder configured to sense an amount of rotation of a first electrode unwinder configured to unwind the first electrode sheet,

the second input amount of the second electrode sheet is determined by a second input amount signal generated by a second rotary encoder configured to sense an amount of rotation of a second electrode unwinder configured to unwind the second electrode sheet, and
the third input amount of the third electrode sheet is determined by a third input amount signal generated by a third rotary encoder configured to sense an amount of rotation of a third electrode unwinder configured to unwind the third electrode sheet.

16. A bi-cell comprising:

a first electrode;
a second electrode coupled to the first electrode with a separator interposed therebetween, wherein a polarity of the second electrode is different from a polarity of the first electrode; and
a third electrode coupled to the second electrode with a separator interposed therebetween, wherein a polarity of the third electrode is different from the polarity of the second electrode and is the same as the polarity of the first electrode,
wherein one of the first to third electrodes comprises an electrode identifier (ID), and
the electrode ID matches at least one of coordinates of the first to third electrodes.

17. The bi-cell of claim 16, wherein the coordinates indicate positions of the first to third electrodes during the coupling of the first to third electrodes with the separators interposed therebetween, and
the at least one coordinate matching the electrode ID indicates a position of at least one electrode corresponding to the at least one coordinate among the first to third electrodes in a process when the electrode ID is sensed.

18. An electrode assembly comprising:

a second separator sheet extending in a spiral shape; and
a plurality of bi-cells of claim 16 stacked vertically with the second separator sheet therebetween,
wherein the plurality of bi-cells are positioned between spiral arms of the second separator sheet to be sequentially covered with the second separator sheet extending in the spiral shape.

19. The electrode assembly of claim 18, wherein the plurality of bi-cells comprise a A-type bi-cell in which one negative electrode is disposed between two positive electrodes and a C-type bi-cell in which one positive electrode is disposed between two negative electrodes,
wherein the A-type bi-cell and the C-type bi-cell are alternately stacked with the second separator sheet interposed therebetween.

20. The electrode assembly of claim 18, wherein an electrode identifier (ID) of an electrode of an uppermost bi-cell of the electrode assembly is allocated as a representative ID of the electrode assembly.

[FIG. 1]

10

ERP  111P

111S1

SR1

SS1  113P

TN  113N  117  MC

111N  TP  EPP

ERN

ESN  115  SS2  EPN  MD

111S2  SR2

[FIG. 2]

BC

EPN1  TN1

⊖

SS1

⊕

TP

EPP

SS2

⊖

EPN2  TN2

[FIG. 3]

BC

[FIG. 4]

[FIG. 5]

[FIG. 6]

[FIG. 7]

[FIG. 8]

[FIG. 9]

127

ESP1  123P1  113P1  EPP1

ERP1
111P1

|——— OLP1_1 ———|

|———— OLP1_2 ————|

|——————————— OLP1_3 ———————————|

[FIG. 10]

127

ESN  123N  113N  EPN

ERN
111N

|——— OLN_1 ———|

|———— OLN_2 ————|

|——————————— OLN_3 ———————————|

[FIG. 11]

127

123P2    113P2

ESP2                    EPP2

ERP2
111P2

|← OLP2_1 →|

|← OLP2_2 →|

|← OLP2_3 →|

[FIG. 12]

| CUT FIRST ELECTRODE SHEET, SECOND ELECTRODE SHEET, AND THIRD ELECTRODE SHEET TO FORM FIRST ELECTRODES, SECOND ELECTRODES, AND THIRD ELECTRODES | P110 |

↓

| COUPLE FIRST ELECTRODES, SECOND ELECTRODES, AND THIRD ELECTRODES | P120 |

↓

| COLLECT COORDINATE-RELATED ELECTRODE ID DATA | P130 |

↓

| RELATE ROLL MAPS TO ELECTRODE ID | P140 |

[FIG. 13]

BC

SS

FC

EID

[FIG. 14]

## INTERNATIONAL SEARCH REPORT

| International application No. |
| --- |
| **PCT/KR2024/013404** |

| A. | CLASSIFICATION OF SUBJECT MATTER |
| --- | --- |

**H01M 4/04**(2006.01)i; **G06Q 50/04**(2012.01)i; **G01B 7/004**(2006.01)i; **B65H 35/00**(2006.01)i; **G06K 19/06**(2006.01)i; **G06K 7/10**(2006.01)i

According to International Patent Classification (IPC) or to both national classification and IPC

| B. | FIELDS SEARCHED |
| --- | --- |

Minimum documentation searched (classification system followed by classification symbols)

H01M 4/04(2006.01); H01M 10/04(2006.01); H01M 10/48(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지(secondary battery), 전극(electrode), 바이 셀(bi-cell), 아이디(identification, ID), 커터(cutter), 리더(reader), 컨트롤러(controller), 좌표(coordination), 컷 카운트(cut count), 엔코더(encoder), 롤 맵 (roll map)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2023-130338 A1 (CONTEMPORARY AMPEREX TECHNOLOGY CO., LIMITED) 13 July 2023 (2023-07-13)<br>See paragraphs [0059], [0080], [0083], [0093], [0095], [0122] and [0124]; and figures 2, 4, 5 and 8. | 1-20 |
| A | KR 10-2022-0039264 A (LG ELECTRONICS INC.) 29 March 2022 (2022-03-29)<br>See paragraphs [0024]-[0029]. | 1-20 |
| A | KR 10-1906983 B1 (NS CO., LTD.) 11 October 2018 (2018-10-11)<br>See claim 1; and figure 6. | 1-20 |
| A | KR 10-2023-0112517 A (JUN, Tae Ho) 27 July 2023 (2023-07-27)<br>See claims 1-10. | 1-20 |

☑ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **31 December 2024** | **01 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/013404**

| C. | DOCUMENTS CONSIDERED TO BE RELEVANT | |
|---|---|---|
| Category* | Citation of document, with indication, where appropriate, of the relevant passages | Relevant to claim No. |
| A | JP 2015-159015 A (TOYOTA MOTOR CORP.) 03 September 2015 (2015-09-03)<br>See claim 1; and figure 1. | 1-20 |

Form PCT/ISA/210 (second sheet) (July 2022)

**INTERNATIONAL SEARCH REPORT**
Information on patent family members

International application No.

**PCT/KR2024/013404**

| Patent document cited in search report | | | Publication date (day/month/year) | Patent family member(s) | | | Publication date (day/month/year) |
|---|---|---|---|---|---|---|---|
| WO | 2023-130338 | A1 | 13 July 2023 | CN | 116982185 | A | 31 October 2023 |
| | | | | EP | 4369447 | A1 | 15 May 2024 |
| | | | | JP | 2024-526775 | A | 19 July 2024 |
| | | | | KR | 10-2024-0019842 | A | 14 February 2024 |
| | | | | US | 2024-0154149 | A1 | 09 May 2024 |
| KR | 10-2022-0039264 | A | 29 March 2022 | EP | 4220811 | A1 | 02 August 2023 |
| | | | | KR | 10-2627519 | B1 | 23 January 2024 |
| | | | | WO | 2022-065717 | A1 | 31 March 2022 |
| KR | 10-1906983 | B1 | 11 October 2018 | KR | 10-1906982 | B1 | 11 October 2018 |
| | | | | KR | 10-2017-0112895 | A | 12 October 2017 |
| | | | | KR | 10-2018-0013640 | A | 07 February 2018 |
| KR | 10-2023-0112517 | A | 27 July 2023 | | None | | |
| JP | 2015-159015 | A | 03 September 2015 | JP | 6107703 | B2 | 05 April 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230119548
- KR 1020220025288